# FASCICULE DE BREVET EUROPEEN

(11) **EP 0 390 698 B1**
(45) Date de publication et mention de la délivrance du brevet: **08.09.1993**
(21) Numéro de dépôt: 90400878.6
(22) Date de dépôt: 30.03.1990
(51) Int. Cl.: H02J 7/14

(54) **Système de commande de dégivrage en surtension d'un pare-brise électrique de véhicule automobile**
Steuersystem für die elektrische Enteisung der Windschutzscheibe eines Kraftfahrzeugs durch Überspannung
Defrosting-control system using overvoltage for an electrical windshield of an automotive vehicle

(30) Priorité: 31.03.1989 FR 8904307
(43) Date de publication de la demande: 03.10.1990
(73) Titulaire: VALEO EQUIPEMENTS ELECTRIQUES MOTEUR, 94000 Creteil (FR)
(72) Inventeur: Pierret, Jean-Marie, F-75012 Paris (FR); Canitrot, Didier, F-94510 La Queue En Brie (FR)
(74) Mandataire: Martin, Jean-Jacques

(56) Documents cités:
- EP-A- 0 246 976
- EP-A- 0 286 510
- WO-A-84/03595
- DE-C- 3 801 478
- US-A- 4 673 797
- US-A- 4 678 982

## Description

La présente invention est relative à un système de commande de dégivrage en surtension d'un pare-brise électrique de véhicule automobile.

Pour assurer le dégivrage rapide des pare-brises électriques de véhicule automobile, on a déjà proposé d'effectuer une alimentation en énergie électrique de ces derniers en régime de surtension, ceci afin d'assurer une action de dégivrage efficace dans un temps bref ne dépassant pas quelques minutes.

De tels systèmes de dégivrage rapide ont été décrits par exemple dans la demande de brevet européen EP-A-0 246 976.

Dans les systèmes précités, une tension d'alimentation élevée (le régime de surtension pouvant atteindre jusqu'à 5 à 6 fois la valeur de la tension nominale de charge de la batterie du véhicule automobile) est appliquée au pare-brise électrique par modification du niveau de régulation de la tension en sortie redressée alternateur.

Des moyens de commutation interconnectés en sortie redressée alternateur permettent d'assurer la liaison de cette sortie vers le réseau de distribution d'énergie électrique à tension nominale de la batterie du véhicule automobile ou vers le réseau d'alimentation en surtension du pare-brise.

La régulation en surtension est inhibée ou autorisée selon que la sortie redressée alternateur soit reliée à la batterie ou au pare-brise.

Le brevet US-A-4 678 982 décrit un autre système de commande en surtension, pouvant s'appliquer notamment au réseau d'alimentation de la résistance de chauffage d'un pare-brise d'un véhicule automobile et comprenant un organe de commande recevant une pluralité de signaux de contrôle d'état et délivrant une pluralité de signaux de commande séquentielle, ces signaux comportant aussi un signal de désexcitation de l'inducteur de l'alternateur et un signal de commutation destiné à commander des moyens de commutation du type décrit dans la demande de brevet européen précitée.

Dans les dispositifs précités, la commande de modification du niveau de régulation ne prend pas en compte l'état du dispositif de commutation assurant l'aiguillage de l'énergie électrique, fournie par l'alternateur, vers la batterie, en vue de la recharge de celle-ci ou vers le pare-brise électrique, afin d'assurer le dégivrage de celui-ci.

En particulier, en présence d'un défaut de commutation, et en conséquence d'aiguillage, les dispositifs précédemment mentionnés sont susceptibles de placer la batterie en situation de surcharge, avec des conséquences dommageables ou dangereuses, telles que par exemple destruction des lampes du véhicule, risque d'incendie ou même d'explosion de la batterie.

Une telle situation est susceptible de se présenter lorsque le dispositif de dégivrage précité entre en action et qu'un défaut du dispositif de commutation maintient indûment la liaison sortie redressée alternateur-batterie.

En outre, dans les dispositifs précités, la fonction de réamorçage du régulateur reste active tant que le dispositif de dégivrage et donc le dispositif de commutation sont en action, c'est-à-dire pendant quelques minutes.

En conséquence, dans le cas de l'existence d'un défaut de mise en court-circuit de la ligne d'alimentation du pare-brise électrique, l'alternateur délivre la totalité de son énergie sur ce court-circuit pendant toute la durée du dégivrage. Une telle situation présente également un risque dommageable pour le véhicule, d'incendie notamment.

La présente invention a pour but la mise en oeuvre d'un système de commande de dégivrage en surtension du pare-brise électrique d'un véhicule automobile dans lequel les inconvénients précités sont supprimés.

Un autre objet de la présente invention est en particulier la mise en oeuvre d'un système de commande de dégivrage en surtension du pare-brise électrique d'un véhicule automobile dans lequel le risque de fonctionnement du régulateur en régulation en surtension de la sortie redressée alternateur lorsque la batterie est reliée par le dispositif de commutation à la sortie redressée alternateur est supprimé.

Un autre objet de la présente invention est également la mise en oeuvre d'un système de commande de dégivrage en surtension du pare-brise électrique d'un véhicule automobile dans lequel le fonctionnement du régulateur en régulation en surtension de la sortie redressée alternateur n'est effectivement autorisée que lorsque la liaison alternateur-ligne d'alimentation pare-brise est effectuée.

Un objet d'un mode de réalisation de la présente invention est la mise en oeuvre d'un système de commande de dégivrage en surtension du pare-brise électrique d'un véhicule automobile dans lequel le temps effectif de réamorçage de l'alternateur, pendant lequel l'inducteur de l'alternateur est excité plein champ, est limité à un temps égal à une fraction du temps de dégivrage.

De façon plus précise, la présente invention a pour objet un système de commande de dégivrage en surtension du pare-brise électrique d'un véhicule automobile, comportant :
- un alternateur de charge de batterie, le contrôle de l'excitation de l'inducteur dudit alternateur étant effectué par l'intermédiaire d'un régulateur d'excitation et la régulation en surtension étant inhibée lorsque la batterie est reliée à la sortie redressée alternateur, alors qu'elle est autorisée lorsque le pare-brise est relié à la sortie redressée alternateur ;
- des moyens de commutation interconnectés en sortie redressée alternateur et permettant d'assurer la liaison de ladite sortie redressée alternateur vers le réseau de distribution d'énergie électrique à tension nominale de la batterie du véhicule ou vers le réseau d'alimentation du pare-brise électrique ;

lequel système de commande est caractérisé en ce qu'il comporte en outre :
- un calculateur de climatisation ou gestion ;
- un organe de commande interconnecté audit calculateur, ledit organe de commande recevant dudit calculateur un signal de déclenchement de dégivrage du pare-brise et transmettant audit calculateur une pluralité de signaux de contrôle d'état, ledit organe de commande étant constitué par une unité logique délivrant une pluralité de signaux de commande séquentielle, ladite pluralité de signaux de commande séquentielle comportant au moins :
   . un signal de commande de désexcitation de l'inducteur de l'alternateur, délivré audit régulateur d'excitation,
   . un signal de commande de commutation destiné à commander lesdits moyens de commutation,
   et provoquant successivement au moins :
   . la désexcitation de l'alternateur pour amener ce dernier d'un régime de fonctionnement à tension de sortie redressée égale à la tension nominale de charge de la batterie à un régime de tension de sortie réduite,
   . la commutation des moyens de commutation pour assurer la liaison de la sortie redressée alternateur vers le réseau d'alimentation du pare-brise électrique,
   . la commande de rerégulation de la tension d'excitation de l'alternateur,
   . la commande d'excitation de l'inducteur de l'alternateur en régime de surtension d'alimentation pendant une fraction du temps de dégivrage, puis sur disparition dudit signal de déclenchement de dégivrage du pare-brise délivré par ledit calculateur de climatisation,
   . la désexcitation de l'alternateur pour amener ce dernier du régime de fonctionnement à tension de sortie redressée en surtension à un régime de tension de sortie réduite,
   . la commutation des moyens de commutation pour assurer la liaison de la sortie redressée alternateur vers le réseau de distribution d'énergie électrique à tension nominale du véhicule,
   . la commande d'excitation de l'inducteur de l'alternateur en régime de tension de sortie redressée égale à la tension nominale de charge de la batterie,
   ledit organe de commande comportant en outre un circuit de détection de défaut d'alimentation des circuits de dégivrage du pare-brise électrique, ce circuit de détection comprenant :
   . un module de détection de mise en court-circuit de la ligne d'alimentation en surtension du pare-brise électrique ;
   . un module de détection de mise en circuit ouvert de la ligne d'alimentation en surtension du pare-brise électrique.

Le système selon l'invention trouve application au domaine de l'industrie automobile, relativement à l'équipement des véhicules personnels, utilitaires ou poids lourds.

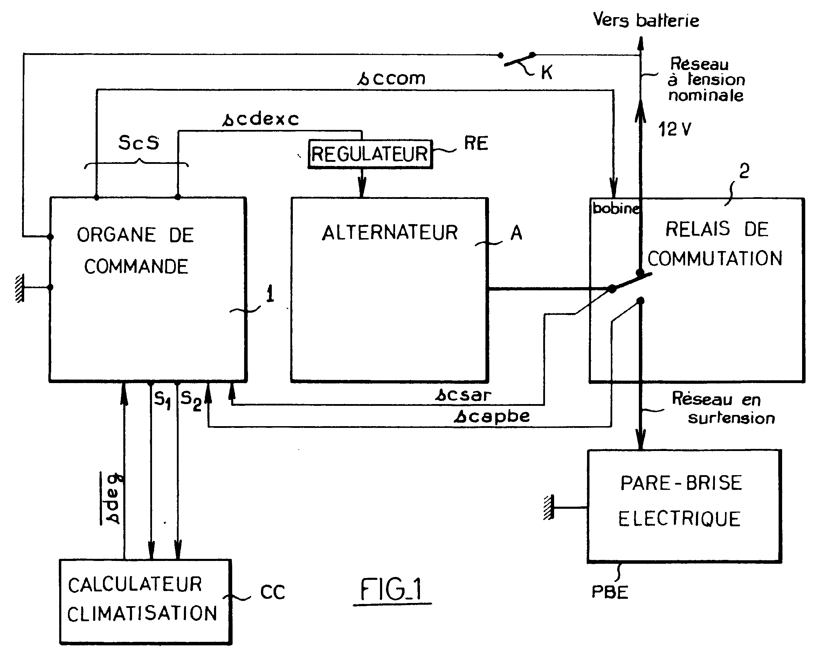

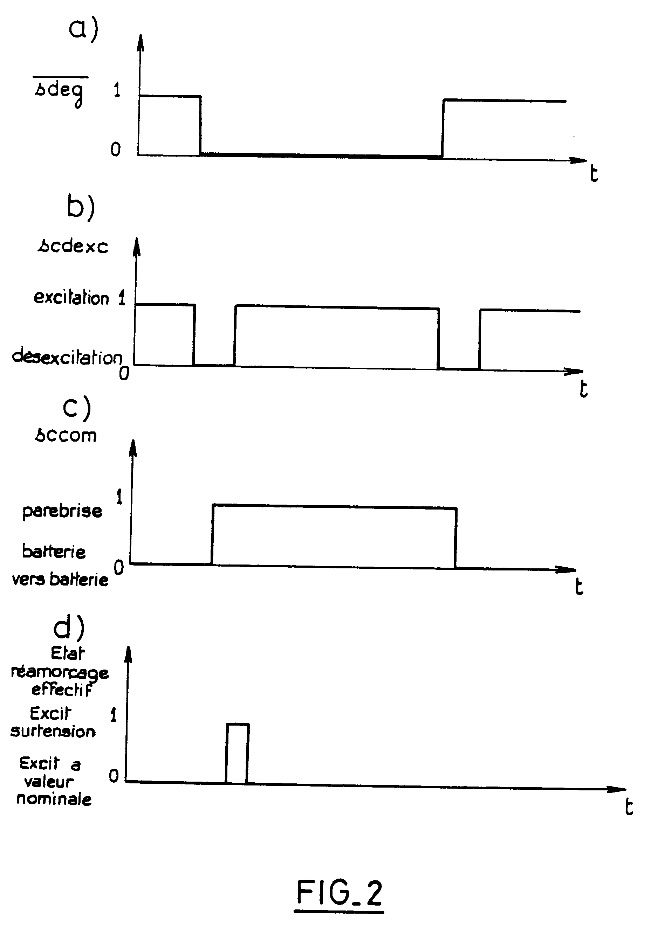

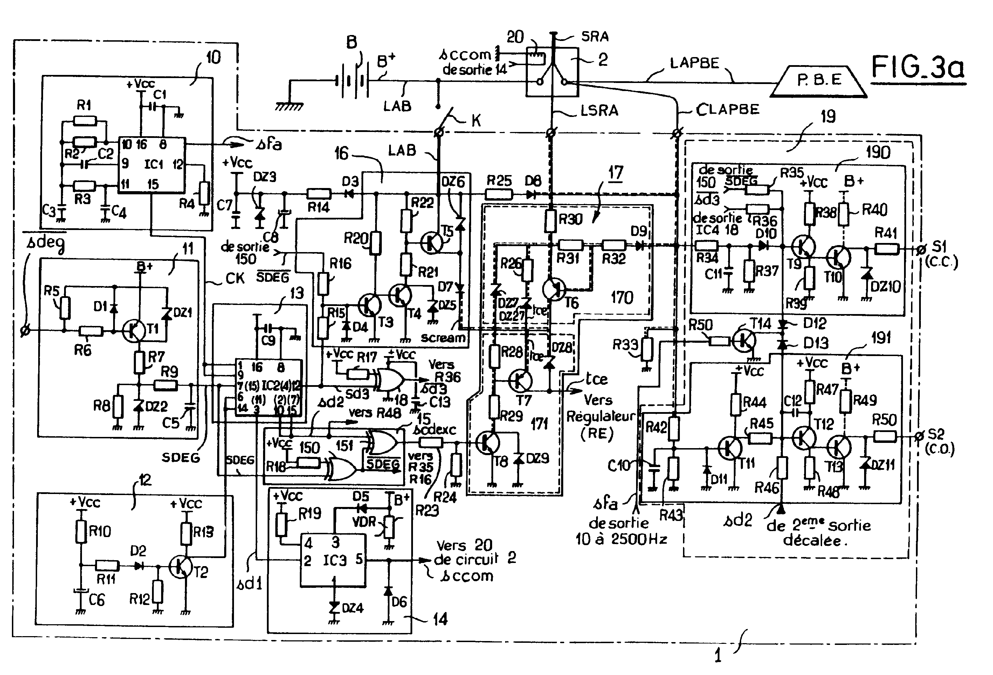

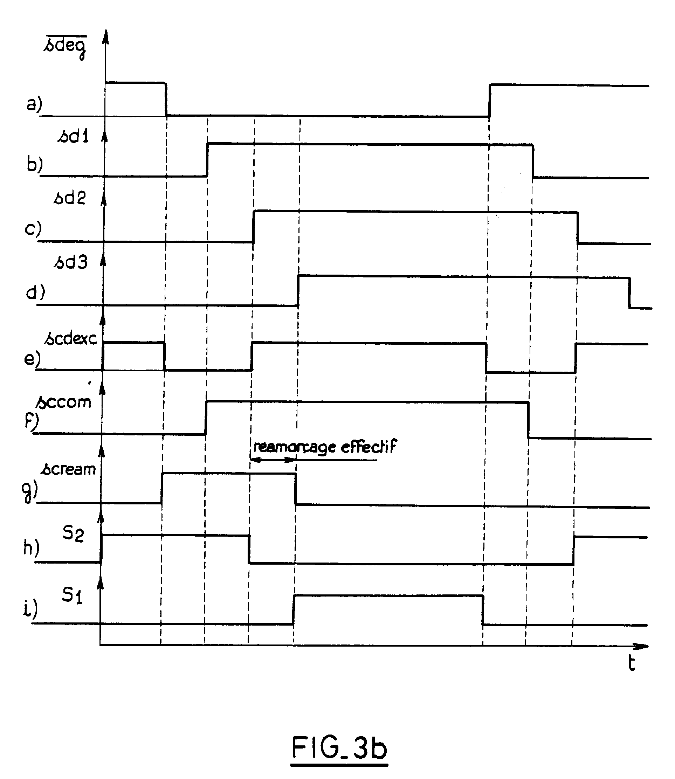

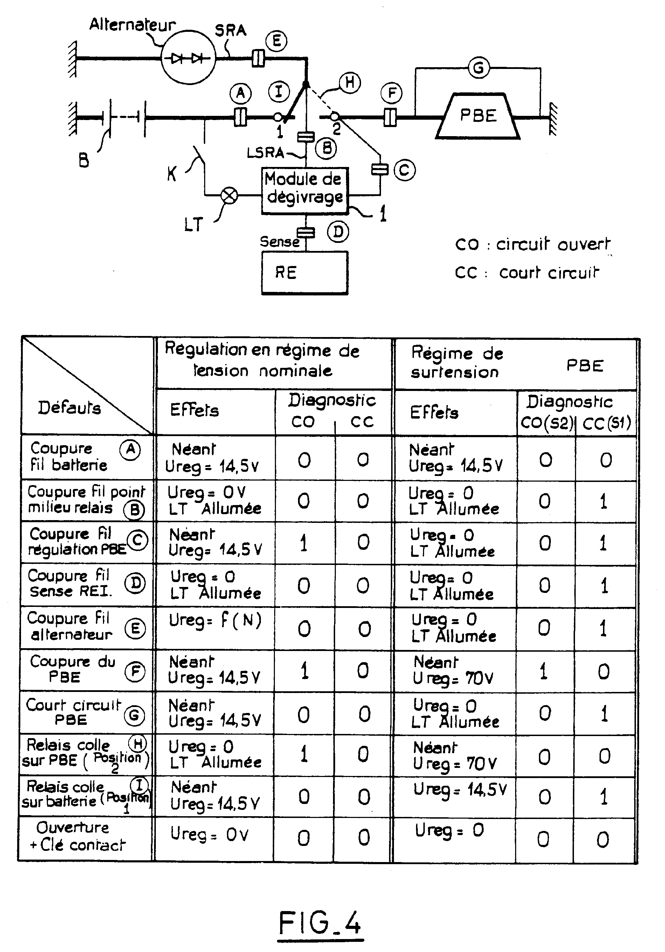

D'autres caractéristiques du système, objet de l'invention, apparaîtront à la lecture de la description et à l'observation des dessins ci-a près, dans lesquels :
. la figure 1 représente un schéma synoptique fonctionnel du système objet de l'invention,
. la figure 2 représente une série de diagrammes d'état du système objet de l'invention, tel que représenté en figure 1,
. la figure 3a représente un mode de réalisation particulier avantageux non limitatif du système objet de l'invention, tel que représenté en figure 1,
. la figure 3b représente une série de chronogrammes de signaux obtenus par la mise en oeuvre du système selon l'invention, tel que représenté en figure 3a, permettant l'obtention des diagrammes d'état de la figure 2,
. la figure 4 représente un schéma électrique d'une installation de réseau d'alimentation électrique d'un véhicule automobile muni d'un système conforme à la présente invention et des différents défauts susceptibles d'intervenir sur cette installation, ainsi qu'un tableau récapitulatif de leurs effets sur la régulation et de leur signalisation au niveau du calculateur de climatisation et de la lampe témoin LT.

Le système de commande de dégivrage en surtension du pare-brise électrique PBE d'un véhicule automobile objet de la présente invention sera tout d'abord décrit en liaison avec la figure 1.

Le système, objet de l'invention, est destiné à être mis en oeuvre dans un véhicule automobile muni d'un calculateur de climatisation CC sur la figure 1 et d'un alternateur de charge batterie, le contrôle de l'excitation de l'inducteur de l'alternateur, cet alternateur étant noté A, étant effectué par l'intermédiaire d'un régulateur d'excitation RE. De préférence, le régulateur RE peut être constitué par tout type de régulateur multifonction permettant d'assurer la détection de défauts multiples. Ce type de régulateur est parfaitement connu de l'état de la technique et ne sera pas décrit plus en détail ci-après dans la description.

Ainsi qu'on l'a représenté en figure 1, le système, conforme à l'objet de la présente invention, comporte un organe de commande 1 interconnecté au calculateur de climatisation CC. L'organe de commande reçoit du calculateur de climatisation CC un signal s̅d̅e̅g̅ de déclenchement de dégivrage du pare-brise PBE. On comprendra, en particulier, que le calculateur de climatisation CC peut être constitué par un microcontrôleur 8 bits par exemple, le signal de déclenchement de dégivrage s̅d̅e̅g̅ consistant en un signal binaire occupant un niveau haut et un niveau bas, le passage de l'un à l'autre niveau correspondant à un ordre de déclenchement du dégivrage du pare-brise, le passage réciproque correspondant à un ordre d'arrêt ou de fin de dégivrage du pare-brise.

Selon une autre caractéristique avantageuse de l'organe de commande 1 précité, celui-ci transmet au calculateur de climatisation CC une pluralité de signaux de contrôle d'état S1, S2, lesquels permettent de transmettre au calculateur de climatisation CC des informations relatives à l'état du système, ainsi qu'il sera décrit ultérieurement dans la description. L'organe de commande 1 est constitué par une unité logique délivrant une pluralité de signaux de commande séquentielle SCS, ainsi que représenté sur la figure 1.

En outre, ainsi qu'on l'a représenté sur cette même figure, le système de commande selon l'invention comprend des moyens de commutation 2 interconnectés en sortie redressée de l'alternateur A. Les moyens de commutation 2 précités permettent d'assurer la liaison de la sortie redressée alternateur vers le réseau de distribution d'énergie électrique à tension nominale de la batterie du véhicule ou vers le réseau d'alimentation du pare-brise électrique PBE.

Selon une caractéristique avantageuse du système objet de l'invention, la pluralité de signaux de commande séquentielle SCS comporte au moins un signal de commande de désexcitation scdexc de l'inducteur de l'alternateur délivré au régulateur RE d'excitation. La liaison entre le régulateur d'excitation RE et l'alternateur ne sera pas décrite plus en détail car celle-ci est connue de l'homme du métier dans le domaine technique considéré. La pluralité de signaux de commande séquentielle SCS précitée comporte en outre un signal sccom de commande de commutation destiné à commander les moyens de commutation 2.

Conformément à l'invention, la régulation en surtension est inhibée lorsque la batterie est reliée à la sortie redressée alternateur A mais autorisée lorsque le pare-brise PBE est relié à la sortie redressée alternateur A.

Ainsi qu'on l'a représenté en outre en figure 1, l'organe de commande 1 reçoit également un signal de contrôle scsar représentatif de l'état du niveau de tension de la sortie redressée alternateur et un signal de contrôle scapbe représentatif de l'état d'alimentation du pare-brise électrique PBE. Le rôle et la fonction de ces deux derniers signaux seront décrits plus en détail ultérieurement dans la description.

Selon un aspect plus particulièrement avantageux du système objet de l'invention, ainsi qu'il sera décrit plus en détail en relation avec la figure 2, cette figure étant plus particulièrement relative à une série de diagrammes d'état du système de commande objet de l'invention tel que représenté en figure 1, les signaux de la pluralité de signaux de commande séquentielle SCS, suite à l'occurrence du signal de déclenchement de dégivrage s̅d̅e̅g̅ du pare-brise délivré par le calculateur de climatisation CC, provoquent successivement, ainsi qu'on l'a représenté en figure 2 au point a), la désexcitation de l'alternateur A par l'intermédiaire du signal de commande de désexcitation scdexc pour amener l'alternateur précité d'un régime de fonctionnement à tension de sortie redressée égale à la tension nominale de charge de la batterie à un régime de tension de sortie réduite. La désexcitation de l'alternateur A est effectuée par commande de coupure du courant d'excitation de l'inducteur de l'alternateur, la tension délivrée par l'alternateur, suite à la désexcitation de celui-ci, correspondant essentiellement à la tension délivrée en raison de la présence de l'induction rémanente de l'inducteur. La pluralité de signaux de commande séquentielle SCS provoquent ensuite, ainsi que représenté au point c de la figure 2, la commutation des moyens de commutation 2 pour assurer la liaison de la sortie redressée alternateur vers le réseau d'alimentation du pare-brise électrique PBE, ainsi que représenté par l'état du signal sccom.

Suite à la commutation précitée, ainsi qu'on l'a représenté au point b de la figure 2, la pluralité de signaux de commande séquentielle SCS provoquent ensuite la commande de rerégulation de la tension d'excitation de l'alternateur, c'est-à-dire le retour en situation d'excitation de l'alternateur. Suite au retour à la situation d'excitation telle que représentée au point b de la figure 2, et de manière sensiblement simultanée, les signaux de commande séquentielle provoquent ensuite, ainsi que représenté au point d de la figure 2, la commande d'excitation de l'inducteur de l'alternateur en régime de surtension d'alimentation pendant une fraction du temps de dégivrage très inférieur au temps de dégivrage lui-même.

Sur disparition du signal de déclenchement de dégivrage s̅d̅e̅g̅, tel que représenté au point a de la figure 2, cette disparition étant représentée par le retour en position 1 du signal s̅d̅e̅g̅, la pluralité de signaux de commande séquentielle SCS provoque ensuite à nouveau la désexcitation de l'alternateur A pour amener l'alternateur précité du régime de fonctionnement à tension de sortie redressée en surtension en l'absence d'excitation effective à un régime de tension de sortie réduite par suppression du courant d'excitation dans l'inducteur, ainsi que décrit précédemment.

Suite à la désexcitation précitée, représentée au point b de la figure 2, la pluralité de signaux de commande séquentielle SCS provoque ensuite la commutation des moyens 2 de commutation pour assurer la liaison de la sortie redressée de l'alternateur vers le réseau de distribution d'énergie électrique à tension nominale du véhicule, puis le retour de la commande d'excitation de l'inducteur de l'alternateur A en régime de tension de sortie redressée égale à la tension nominale de charge de la batterie.

Un mode de réalisation plus détaillé d'un organe de commande 1, permettant d'obtenir les diagrammes d'état représentés aux points a à d de la figure 2, sera décrit en liaison avec les figures 3a et 3b.

Selon la figure 3a précitée, l'organe de commande 1 comporte, de manière avantageuse, une horloge de référence 10 délivrant des impulsions calibrées Ck de fréquence de récurrence déterminée. L'horloge 10 peut par exemple délivrer des signaux Ck constitués par des impulsions de fréquence 5 Hz par exemple. L'horloge peut par exemple être réalisée au moyen d'un circuit intégré commercialisé en France sous la référence HEF 4060, les résistances R1 à R4 et les condensateurs C1 à C4 correspondant à des éléments de mise en oeuvre de ce type de circuit intégré donnés par le constructeur.

Ainsi qu'on l'a en outre représenté en figure 3a, le signal de déclenchement de dégivrage sdeg délivré par le calculateur de climatisation correspond normalement, ainsi que décrit précédemment, à un signal logique de niveau haut ou de niveau bas.

Afin de satisfaire à des impératifs de caractéristiques de puissance dans les connexions entre le module de commande et le calculateur de climatisation, un module interface 11 peut être prévu dans l'organe de commande 1, afin de prévoir la circulation d'un courant de valeur satisfaisante entre les deux systèmes, module et calculateur. Le module interface 11 peut comprendre avantageusement un transistor T1 monté en émetteur commun et alimenté à partir de la borne positive B+ de la batterie B sur la figure 3a. Les résistances de polarisation R5, R6, R7, R8 , R9 et les diodes D1, diodes Zéner DZ1, DZ2 et le condensateur C5 correspondent à des composants de type classique pour assurer la polarisation du transistor T1, la circulation d'un courant entre le module de commande et le calculateur de climatisation, et la transmission complémentée ou inversée du signal de déclenchement du dégivrage produit par le calculateur précité s̅d̅e̅g̅ au circuit logique proprement dit. Le signal de sortie de l'interface 11 est repéré SDEG et est exactement l'inverse du signal engendré par le calculateur de climatisation s̅d̅e̅g̅.

En outre, ainsi qu'on l'a représenté en figure 3a, l'organe de commande 1 peut comporter avantageusement un module de remise à zéro, lequel, dès la mise sous tension, assure la remise à zéro des circuits logiques de l'organe de commande 1, ainsi qu'il sera décrit ultérieurement dans la description.

Le module 12 de remise à zéro peut comporter, à cet effet, un transistor T2 polarisé par des résistances R10, R11, R12, R13, une diode D2 et un condensateur C6, le transistor T2 étant alimenté par la tension d'alimentation +Vcc, cette tension d'alimentation correspondant à la tension d'alimentation de l'ensemble du dispositif électronique du système. A titre d'exemple non limitatif, la tension d'alimentation +Vcc peut être prise égale à + 5 Volts. Dès la mise sous tension, le transistor T2, par l'intermédiaire des circuits de polarisation du circuit à résistance-capacité R10, C6, délivre une tension sous forme d'impulsion sur le collecteur ou la résistance R13, lequel permet une remise à zéro de l'ensemble des circuits logiques, ainsi qu'il sera décrit ultérieurement dans la description.

Ainsi qu'on l'a en outre représenté en figure 3a, l'organe de commande 1 comporte, de manière avantageuse, un registre à décalage 13 recevant d'une part, sur une entrée de cadencement les impulsions d'horloge Ck précitées, et d'autre part, sur une entrée à décalage le signal de déclenchement de dégivrage SDEG délivré par l'interface à partir du signal engendré par le calculateur de climatisation CC. De manière classique, le registre à décalage comprend une pluralité de sorties à décalage successivement incrémentées. Le décalage apporté par chaque sortie à décalage correspond sensiblement à un nombre déterminé d'impulsions d'horloge de fréquence données.

Ainsi qu'on l'a en outre représenté en figure 3a, l'organe de commande 1 comprend également un premier circuit d'interface 14 recevant à une borne d'entrée le signal décalé sd1 délivré par une première sortie à décalage du registre à décalage 13 et délivrant aux moyens de commutation 2 le signal sccom de commande de commutation de puissance.

A titre d'exemple non limitatif, le registre à décalage 13 peut être constitué par un circuit intégré commercialisé en France sous la référence HEF 4015, la capacité C9 correspondant aux spécifications du constructeur de ce circuit intégré.

De même, le premier circuit d'interface 14 peut être constitué par un circuit intégré commercialisé en France sous la référence TSP05, les résistances R19 et les diodes D5, D6 et diode Zéner DZ4 correspondant à des composants de caractéristiques spécifiées par le constructeur. L'organe VDR permet une stabilisation en tension.

Bien entendu, ainsi qu'on l'a représenté en figure 3a, les moyens de commutation 2 peuvent être constitués par un relais de commutation dont la borne d'entrée de commutation est reliée à la sortie redressée alternateur SRA et dont les bornes de sortie de commutation sont reliées respectivement à la batterie B, au pôle B+ de celle-ci, et au pare-brise électrique PBE par l'intermédiaire d'une ligne d'alimentation batterie LAB et d'une ligne d'alimentation de pare-brise électrique LAPBE. Le relais constituant un moyen de commutation 2 comporte une bobine de commande 20, laquelle est reliée en sortie du premier circuit d'interface 14 et reçoit le signal de commande de commutation sccom.

Ainsi qu'on l'a en outre représenté en figure 3a, l'organe de commande 1 comprend un deuxième circuit d'interface 15 recevant à une première borne d'entrée le signal décalé sd2 délivré par une deuxième sortie à décalage du registre à décalage 13 et à une deuxième borne d'entrée le signal de déclenchement de dégivrage SDEG. Le deuxième circuit d'interface 15 précité délivre à une de ses sorties un signal scdexc de commande de désexcitation de l'alternateur A. Ce signal consiste en un signal obtenu par combinaison logique de type OU exclusif entre le signal de déclenchement de dégivrage inversé S̅D̅E̅G̅ et le signal décalé sd2 délivré par la deuxième sortie décalée du registre à décalage 13.

L'organe de commande 1 comporte également un troisième circuit d'interface 16 recevant à une première borne d'entrée le signal de déclenchement de dégivrage SDEG délivré par le calculateur de climatisation CC, après inversion, et à une deuxième borne d'entrée le signal décalé sd3 délivré par une troisième sortie à décalage du registre à décalage 13. Ce troisième circuit d'interface délivre un signal scream de commande de réamorçage de l'alternateur, ainsi qu'il sera décrit ultérieurement dans la description. Le signal scream de commande de réamorçage de l'alternateur consiste en un signal obtenu par combinaison logique de type NON-OU entre le signal de déclenchement de dégivrage inversé S̅D̅E̅G̅ et le signal décalé délivré par la troisième sortie à décalage du registre à décalage 13.

L'organe de commande 1 comporte enfin un circuit 17 de commande du régulateur d'excitation RE comportant, connectés en série sur la borne d'entrée de commande d'excitation du régulateur, un circuit 170 de réglage de la tension de commande d'excitation et un circuit 171 de commutation. Le circuit 170 de réglage de la tension de commande d'excitation est interconnecté à la sortie redressée alternateur SRA et permet sur occurrence du signal de déclenchement de dégivrage SDEG d'engendrer une tension de commande d'excitation tce à deux valeurs distinctes. Le circuit 171 de commutation reçoit sur une borne d'entrée de commutation la tension de commande d'excitation tce délivrée par le circuit 170 de réglage de la tension de commande d'excitation. Le circuit de commutation 171 effectue sur une borne de sortie, soit la transmission au régulateur d'excitation de la tension de commande d'excitation tce à l'une ou l'autre de ses deux valeurs, soit la coupure de cette tension de commande d'excitation pour assurer, soit l'excitation de l'inducteur de l'alternateur A pour obtenir une tension redressée alternateur en régime de surtension ou en régime de tension nominale de charge de la batterie, soit la désexcitation de l'inducteur de l'alternateur A.

Une description plus détaillée du mode de réalisation des deuxième 15, troisième 16 circuits d'interface et du circuit 17 de commande du régulateur d'excitation sera maintenant donnée en liaison avec la figure précitée.

Selon cette figure, le deuxième circuit d'interface 15 comprend un circuit inverseur 150 réalisé à partir d'un circuit logique de type OU exclusif à deux entrées. La première entrée du circuit inverseur 150 est interconnectée à la tension d'alimentation de référence +Vcc et la deuxième entrée est pilotée par le signal de déclenchement de dégivrage délivré par le calculateur de climatisation. La sortie du circuit inverseur 150 délivre un signal inversé .S̅D̅E̅G̅. L'interface 15 comporte également un circuit logique de type OU exclusif 151, lequel reçoit sur une première entrée le signal inversé .S̅D̅E̅G̅ délivré par le circuit inverseur 150 et sur une deuxième entrée le signal décalé sd2 délivré par la deuxième sortie à décalage du registre à décalage 13. La sortie du circuit logique 151 de type OU exclusif constitue une sortie du deuxième circuit d'interface 15 et délivre le signal de commande de désexcitation de l'alternateur, signal noté scdexc.

Ainsi qu'on l'a en outre représenté en figure 3a, le troisième circuit d'interface 16 comporte deux entrées connectées à deux résistances R15, R16. Une première borne d'entrée, résistance R16, reçoit le signal de déclenchement de dégivrage inversé S̅D̅E̅G̅ délivré par la sortie du circuit inverseur 150 et une deuxième borne d'entrée, résistance R15, reçoit le signal décalé sd3 délivré par la troisième sortie à décalage du registre à décalage 13. Le troisième circuit d'interface 16 comporte également un étage de commande de puissance comportant montés en cascade deux transistors de type NPN T3 et T4. La base du transistor T3 est directement connectée au point milieu des deux résistances et la base du transistor T4 est connectée au collecteur du transistor T3.

Ainsi qu'on pourra le noter sur la figure 3a, les transistors T3 et T4 sont alimentés par la tension batterie par l'intermédiaire de la ligne d'alimentation batterie LAB reliée par la clef de contact K ou par le B+ de la batterie.

En outre, les transistors T3 et T4 sont montés en émetteur commun et respectivement chargés dans leur circuit de collecteur par des résistances R20, respectivement R21, R22. La tension d'alimentation B+ est également reliée par l'intermédiaire d'une diode D3 et d'une résistance R14 à une diode Zéner DZ3 et deux condensateurs C7, C8 de filtrage afin d'engendrer la tension d'alimentation des circuits logiques +Vcc.

En outre, le troisième circuit d'interface 16 comporte également un transistor de sortie T5 de type complémenté, PNP, la base du transistor T5 étant connectée au point milieu du pont de résistances R21, R22. Le collecteur du transistor T5 est connecté au point milieu d'un pont de diodes DZ6, D7, la diode D7 étant connectée dans le sens passant vis-à-vis du transistor T5 pour constituer une sortie délivrant le signal de commande de réamorçage de l'alternateur, ce signal étant noté scream, la fonction de ce signal faisant l'objet d'une description ultérieure.

Sur la figure 3a, on a en outre représenté un mode de réalisation particulier avantageux non limitatif du circuit de réglage 170 de la tension de commande d'excitation et du circuit 171 de commutation.

Sur la figure précitée, ainsi qu'on l'a représenté, le circuit 170 de réglage de la tension de commande d'excitation comprend avantageusement un premier pont diviseur constitué par deux résistances R30 et R26 en série et une diode Zéner DZ27. Le pont diviseur est connecté à sa borne d'entrée, résistance R30, à la sortie redressée alternateur par l'intermédiaire d'une ligne de sortie redressée alternateur LSRA sur la figure 3a. Le circuit 170 de réglage de la tension de commande d'excitation comporte également un transistor de commutation T6 dont les bornes de commutation collecteur-émetteur sont connectées en parallèle sur l'élément série constitué par la résistance R26 et la diode Zéner DZ27. La base du transistor T6 est connectée au point milieu d'un deuxième pont diviseur constitué par deux résistances R31 et R32 et une diode D9. Le deuxième pont diviseur relie ainsi le point milieu du premier pont diviseur, c'est-à-dire le point commun aux résistances R30 et R26, et la borne d'alimentation en surtension du pare-brise électrique PBE, cette borne étant reliée à la ligne d'alimentation du pare-brise électrique LAPBE. En outre, une diode Zéner DZ7 est connectée en parallèle sur l'élément série constitué par la résistance R26 et par la diode Zéner DZ27. Le circuit 170 de réglage de la tension de commande d'excitation délivre, sur commutation du transistor T6, la tension de commande tce d'excitation à l'une ou l'autre de ses deux valeurs. Le fonctionnement du circuit de réglage de la tension de commande d'excitation 170 sera décrit ultérieurement dans la description.

Enfin, le circuit 171 de commutation, tel que représenté en figure 3a, comporte avantageusement, de manière non limitative, un transistor de commutation T7 assurant la transmission de la tension de commande d'excitation tce au régulateur RE ou de valeurs de cette tension ou, au contraire, assurant la non transmission de cette tension. En outre, un pont diviseur formé par les résistances R28, R29 en série et par la diode Zéner DZ9 est prévu, la borne d'entrée, borne de la résistance R28 de ce pont, étant connectée en un point commun à la borne de sortie, borne de la diode Zéner DZ27 du premier pont diviseur du circuit 170 de réglage de la tension de commande d'excitation et du transistor T6 de ce même circuit.

Le transistor de commande T7, ainsi qu'on l'a représenté sur la figure 3a, a son émetteur connecté au point commun précité, c'est-à-dire à la borne d'entrée du pont diviseur R28, R29 et à la borne de sortie de la diode Zéner DZ27 et au collecteur du transistor T6 alors que la base du transistor de commande T7 est elle-même connectée au point milieu du pont diviseur, c'est-à-dire au point commun entre les résistances R28 et R29.

Le collecteur du transistor de commande T7 constitue la sortie du circuit de commutation 171, cette sortie étant reliée au régulateur RE et, plus particulièrement, à l'entrée communément désignée en vocable anglo-saxon par l'entrée "sensé", laquelle permet de transmettre au régulateur une information relative à la tension de sortie redressée alternateur.

Ainsi qu'on l'a représenté également en figure 3a, le circuit 171 de commutation comporte un transistor T8 de commande de commutation dont le collecteur est connecté au point commun de la diode Zéner DZ9 et de la résistance R29 du pont diviseur et dont la borne d'émetteur est connectée à la tension de masse du système. Le transistor T8 de commande de commutation est monté en émetteur commun, la base de ce transistor étant pilotée par le signal de commande de désexcitation de l'alternateur, le signal scdexc, lequel est délivré par le deuxième circuit d'interface 15 par l'intermédiaire de deux résistances adaptatrices de niveau de tension et de courant R23 et R24.

Une description plus détaillée du fonctionnement global de l'organe de commande 1, tel que représenté en figure 3a, permettant d'obtenir les états successifs de système tels que représentés en figure 2, sera donnée en liaison avec la figure 3b.

Sur la figure 3b, on a représenté au point a le signal de déclenchement de dégivrage s̅d̅e̅g̅ délivré par le calculateur de climatisation CC. Ainsi, l'occurence de déclenchement de dégivrage apparaît, à titre d'exemple non limitatif, lors de la transition du niveau haut de ce signal au niveau bas, cette transition étant déclenchée par le calculateur de climatisation et correspondant à une instruction de déclenchement de dégivrage donnée par celui-ci.

Sur les points b, c et d de la figure 3b, on a représenté également l'état d'une première, deuxième, respectivement troisième sortie décalée du registre à décalage 13. On notera que, préalablement à l'occurrence de la transition précitée pour le signal de déclenchement de dégivrage, les trois sorties décalées précitées sont à leur niveau bas, ce qui correspond à leur état après remise à zéro de l'ensemble du système par le circuit 12 précédemment décrit. Sur apparition de l'ordre de déclenchement de dégivrage correspondant à la transition précitée, le signal de commande de désexcitation de l'alternateur, signal scdexc, est représenté au point e de la figure 3b, lequel, à l'état de repos suite à la remise à zéro de l'ensemble du système se trouvait à son niveau logique haut, passe instantanément à son niveau logique bas. Simultanément, le signal de commande de reamorçage de l'alternateur, signal scream, représenté au point g de la figure 3b dont la position de repos, c'est-à-dire après la remise à zéro de l'ensemble du système, correspond à la valeur de niveau logique bas, passe également instanément à la valeur de niveau logique haut pour les raisons ci-après. A l'état initial, les transistors T3, T4 et T5 du premier circuit d'interface 16 sont respectivement conducteur, bloqué et bloqué. Le signal de commande de réamorçage de l'alternateur scream ayant dans cet état la valeur de son niveau logique bas. Sur occurrence du signal de déclenchement de dégivrage, le signal inversé S̅D̅E̅G̅ délivré par l'inverseur 150 est transmis à l'entrée du circuit interface 16 par l'intermédiaire de la résistance R16, ce qui a pour effet de provoquer la commutation des transistors T3, T4 et T5 et la mise de ces derniers en position de blocage, respectivement conduction et conduction. Le signal de commande de réamorçage de l'alternateur scream passe alors en position de valeur logique haute, ainsi que représenté au point g de la figure 3b. Simultanément, ainsi qu'on l'a représenté au point e de la figure 3b, le signal de commande de désexcitation de l'alternateur scdexc provoque, par l'intermédiaire du transistor de commande T8, l'ouverture du transistor de commutation T7 et, en conséquence, l'ouverture du circuit "sensé" du régulateur de l'alternateur et donc la désexcitation de celui-ci.

On comprendra ainsi que tant que le transistor T7 étant bloqué, ce circuit reste ouvert et que le signal de commande de réamorçage scream ne correspond donc à un réamorçage effectif de l'alternateur A par l'intermédiaire du régulateur RE que lorsque le transistor de commutation T7 est à nouveau conducteur, c'est-à-dire lorsque celui-ci transmet la tension de commande d'excitation tce, ainsi qu'il sera décrit ci-après.

Suite à l'occurrence de la transition constituant ordre de dégivrage du pare-brise, après une impulsion d'horloge, la première sortie décalée du registre à décalage 13 délivre le premier signal décalé sd1, lequel correspond à une transition du niveau logique bas au niveau logique haut décalée de trois à quatre impulsions d'horloge Ck par rapport à l'occurrence du signal de déclenchement de dégivrage s̅d̅e̅g̅. Le signal sd1 délivré par la sortie décalée du premier registre à décalage est représenté au point b de la figure 3b. Ce signal a pour effet, par l'intermédiaire du circuit de puissance de commutation 14, de provoquer et d'engendrer immédiatement le signal de commande de commutation sccom, lequel permet d'appliquer un courant d'excitation de la bobine 20 des moyens de commutation 2. Le relais de commutation 2, lequel assurait la liaison entre la sortie redressée alternateur et la batterie B, permet d'interrompre instantanément cette liaison et d'assurer une nouvelle liaison de la sortie redressée alternateur à la ligne d'alimentation du pare-brise électrique LAPBE. Ainsi qu'on pourra le constater sur la figure 3b, le signal de commande de commutation sccom est absolument synchrone du signal sd1 délivré par la première sortie décalée du registre à décalage 13.

Suite à l'occurence de la transition correspondant au déclenchement du dégivrage, quatre à cinq impulsions d'horloge Ck après cette transition, la deuxième sortie décalée du registre à décalage 13 délivre un signal sd2 représenté au point c de la figure 3b, ce signal correspondant au signal décalé de quatre à cinq impulsions d'horloge. Le signal sd2 délivré par la deuxième sortie décalée du registre à décalage 13 a pour effet, par l'intermédiaire du circuit interface 15, d'engendrer selon une combinaison de type OU exclusif entre le signal de déclenchement de dégivrage SDEG, plus particulièrement le signal de dégivrage inversé S̅D̅E̅G̅ et le signal sd2, le signal de commande de désexcitation de l'alternateur scdexc. Le signal de commande de désexcitation précité a pour effet d'entraîner à nouveau la mise en conduction du transistor T7, le signal de commande de désexcitation de l'alternateur scdexc retrouvant, suite à l'occurrence du signal sd2 délivré par la deuxième sortie décalée du registre à décalage 13, son niveau logique haut ramenant le transistor T7 à l'état initial. Celui-ci assure alors la transmission de la tension de commande d'excitation tce délivrée par le circuit 170 de réglage de la tension de commande d'excitation, ainsi qu'il sera décrit ci-après. A l'état initial, c'est-à-dire après remise à zéro de l'ensemble de l'organe de commande 1 par le circuit 12 de remise à zéro, l'état initial du circuit 170 de réglage de la tension de commande d'excitation correspond à un état dans lequel le transistor T6 est normalement conducteur, l'ensemble ou l'élément série constitué par la résistance R26 et la diode Zéner DZ27 étant normalement court-circuité. La sortie redressée alternateur délivre dans cette situation initiale une tension correspondant à la tension nominale de charge de batterie et la tension de commande d'excitation tce transmise par le transistor de commutation T7 vers l'entrée du régulateur RE correspond à une tension de commande d'excitation pour l'obtention d'une tension redressée alternateur correspondant à la tension nominale de batterie. Bien entendu, on comprendra que dans ce cas le régulateur RE assure, dans ces conditions de fonctionnement, les fonctions essentielles d'un régulateur multifonction, la tension redressée alternateur pouvant présenter les fluctuations par rapport à la tension nominale de charge de batterie correspondant à ce mode de fonctionnement du régulateur. Sur commutation du relais de commutation 2, c'est-à-dire après passage à la valeur logique de niveau élevé du signal de commande de commutation sccom, la commutation du relais constituant un moyen de commutation 2 a pour effet, suite au basculement de l'organe mobile du relais pour la mise en liaison de la sortie redressée alternateur SRA et de la ligne d'alimentation du pare-brise électrique LAPBE, de provoquer par l'intermédiaire du transistor T5, lequel est relié à la borne positive B+ de la batterie par l'intermédiaire de la ligne d'alimentation batterie LAB et de la clef de contact K, l'application d'une tension correspondant à la tension nominale de batterie sur l'entrée du régulateur RE par l'intermédiaire du transistor de commutation T7. L'inducteur de l'alternateur est excité plein champ, le signal de commande de réamorçage de l'alternateur scream correspondant alors à un réamorçage effectif de l'alternateur puisque le signal de commande de désexcitation de l'alternateur a été supprimé, cette phase de réamorçage effective étant représentée au point g de la figure 3b.

Simultanément, la tension de la sortie redressée alternateur augmente, en raison de l'excitation plein champ de l'inducteur, et le transistor T6 se bloque, ce qui a pour effet de libérer l'élément série constitué par la résistance R26 et par la diode Zéner DZ27, l'alternateur A fonctionnant en régime de surexcitation et de surtension. Le régime d'équilibre de l'alternateur A est obtenu, la valeur de la résistance R26 étant alors choisie de façon que la tension délivrée par l'intermédiaire du transistor T7, lequel est alors conducteur, au circuit d'entrée du régulateur RE correspondant sensiblement à une tension de sortie redressée alternateur de l'ordre de 60 à 70 Volts.

Selon une autre caractéristique avantageuse de l'organe de commutation 1 représenté en figure 1, suite à l'occurrence de la transition correspondant au déclenchement de dégivrage représenté au point a de la figure 3b, la troisième sortie décalée du registre à décalage 13 délivre un signal sd3 après cinq à six impulsions d'horloge. Le signal sd3, par l'intermédiaire de la résistance R15 du pont diviseur R15, R16 du troisième circuit d'interface 16, a pour effet d'entraîner le basculement des transistors T3, T4 et T5, ce qui bien entendu a pour effet de ramener le signal de commande de réamorçage scream à sa valeur logique de niveau bas, ce qui permet de limiter le réamorçage effectif de l'alternateur. Le transistor T6 étant bloqué, l'excitation de l'alternateur par l'intermédiaire du régulateur RE est alors effectuée par l'intermédiaire de la sortie redressée alternateur reliée par la ligne de sortie redressée alternateur LSRA, par la résistance 30, les résistances R26 et la diode Zéner DZ27 et par la jonction collecteur-émetteur passant du transistor T7 au circuit d'entrée du régulateur RE.

Le mode de réalisation précité de la figure 3a, tel qu'explicité en liaison avec le chronogramme de la figure 3b et en particulier des points a à g de celui-ci, permet d'éliminer les défauts pouvant avoir des conséquences dangereuses. En effet, le dispositif précité relatif à l'organe de commande 1 permet d'assurer une commande du niveau de régulation de tension dépendant de l'état du dispositif de commutation ou moyens de commutation 2 assurant l'aiguillage de la sortie redressée alternateur, soit vers la batterie, soit vers le pare-brise électrique PBE. Ce dispositif interdit en fait la régulation en haute tension lorsque la batterie est reliée à la sortie redressée alternateur et ne l'autorise que lorsque la liaison alternateur-pare-brise électrique PBE est effectivement réalisée.

On comprendra en effet que le transistor T6 du circuit 170 de réglage de la tension de commande d'excitation ne se bloque que lorsque le relais constituant un moyen de commutation 2 dirige l'énergie de l'alternateur en particulier de la sortie redressée alternateur SRA vers le pare-brise PBE. Sur blocage du transistor T6 précité, la mise en série de la résistance R26 et de la diode Zéner DZ27 avec les circuits d'entrée du régulateur par l'intermédiaire du transistor T7 permet de porter le niveau de régulation à une valeur de tension élevée, c'est-à-dire en régime de surtension de l'alternateur, provoquant le dégivrage du pare-brise électrique PBE. Au contraire, lorsque les moyens de commutation 2 dirigent l'énergie de l'alternateur, en particulier de la sortie redressée alternateur SRA vers la batterie B+, le transistor T6 est conducteur. Dans le cas de l'existence d'un défaut maintenant le transistor T6 en position bloquée, la diode Zéner DZ27 permet la mise à la masse du circuit d'entrée du régulateur RE, ce qui a pour conséquence d'arrêter le courant d'excitation de l'alternateur.

A titre d'exemple non limitatif et pour assurer la fonction précitée, on a utilisé un régulateur multi-fonction commercialisé sous la référence YV16 par la Société MOTOROLA.

En outre, dans le mode de réalisation représenté en figure 3a, l'organe de commande 1 est remarquable par le fait que le temps de réamorçage effectif de l'ordre de 0,5 à 1 seconde et correspondant à quelques périodes des impulsions d'horloge Ck est limité, ainsi qu'on l'a représenté notamment au point g de la figure 3b.

Dans les conditions normales de fonctionnement des circuits d'alimentation du pare-brise électrique, c'est-à-dire en l'absence de défauts de mise en court-circuit de la ligne d'alimentation du pare-brise électrique LAPBE, la durée de réamorçage précitée est suffisante pour permettre une élévation de la valeur de tension en sortie redressée alternateur SRA permettant à l'alternateur de s'amorcer et de rester amorçé pendant toute la durée du dégivrage, c'est-à-dire pendant quelques minutes. Par contre, si la ligne d'alimentation du pare-brise électrique est en court-circuit, la tension reste nulle en sortie de l'alternateur, ainsi que sur le circuit d'entrée du régulateur. En conséquence, le courant d'excitation de l'alternateur A est annulé après le temps de réamorçage effectif, c'est-à-dire de 0,5 à 1 seconde en fonction de la fréquence des impulsions d'horloge Ck. L'alternateur ne peut donc ainsi s'amorcer et son débit est arrêté. En conséquence, l'alternateur ne délivre son énergie dans le court-circuit que pendant un temps très court de 0,5 à 1 seconde au lieu de plusieurs minutes dans les dispositifs de l'art antérieur précédemment mentionnés, ce qui bien entendu limite les risques d'incendie.

Bien entendu, il est avantageux, conformément au mode de réalisation de la figure 3a, de prévoir tout fonctionnement anormal du système d'alimentation du pare-brise électrique en surtension, afin d'éviter justement tout risque intempestif d'alimentation en surtension en présence, soit d'un court-circuit de la ligne d'alimentation du pare-brise électrique, ou de maintien en circuit ouvert de celle-ci en présence d'un défaut correspondant.

Afin de satisfaire l'objet précité, ainsi qu'on l'a représenté en figure 3a notamment, l'organe de commande 1 peut comporter avantageusement un circuit 19 de détection de défauts d'alimentation des circuits de dégivrage du pare-brise électrique PBE.

Ainsi qu'on l'a représenté en figure 3a, le circuit 19 de détection de défauts peut comporter avantageusement un module 190 de détection de mise en court-circuit de la ligne d'alimentation en surtension du pare-brise électrique LAPBE et un module 191 de détection de mise en circuit ouvert de cette même ligne d'alimentation LAPBE en surtension du pare-brise électrique.

Selon le mode de réalisation de la figure 3a, le module 190 de détection de mise en court-circuit de la ligne d'alimentation en surtension du pare-brise électrique peut comporter un étage d'entrée formant pont diviseur par les résistances R34, R37 et constituant en fait un pont diviseur générateur d'une référence de tension. L'entrée de ce pont diviseur, c'est-à-dire la résistance R34 est connectée à la ligne d'alimentation LAPBE du pare-brise électrique PBE. Bien entendu, une capacité de filtrage C11 est prévue en parallèle sur la résistance R37 afin d'assurer le filtrage de la référence de tension engendrée par le pont diviseur.

En outre, le module 190 de détection de mise en court-circuit peut présenter, ainsi qu'on l'a représenté sur la figure 3a, un étage de commutation comportant en cascade un premier transistor T9, dont la base est connectée au point milieu du pont diviseur par l'intermédiaire d'une diode D10.

Le premier transistor T9 est alimenté par la tension d'alimentation +Vcc et forme en fait un étage amplificateur. La base de ce transistor T9 est pilotée d'une part par le signal de déclenchement de dégivrage inversé S̅D̅E̅G̅, ce signal étant délivré par l'inverseur 150 du circuit d'interface 15. La base du premier transistor T9 est également pilotée, après inversion, par le signal sd3 décalé délivré par la troisième sortie décalée du registre à décalage 13.

L'étage de commutation comporte également un deuxième transistor T10, alimenté par la tension batterie B+, la base de ce deuxième transistor étant connectée à l'émetteur du premier transistor T9. L'électrode de collecteur du deuxième transistor T10 délivre au calculateur de climatisation CC le signal S1, ainsi que représenté notamment en figure 1 et au point i de la figure 3b. Le signal S1 est un signal de défauts de court-circuit de la ligne d'alimentation en surtension du pare-brise électrique PBE.

Le pilotage de la base du transistor T9 est assuré par l'intermédiaire de résistances de liaison R35 et R36, lesquelles sont connectées, d'une part, à la sortie de l'inverseur 150 et, d'autre part, à la sortie d'un inverseur 18, cet inverseur délivrant un signal s̅d̅3̅, à partir du signal sd3 reçu sur une première entrée et d'une résistance R17 connectée à une deuxième entrée de cet inverseur, cette résistance étant alimentée par la tension +Vcc. Le circuit 18 inverseur fonctionne de manière analogue au circuit 150 du circuit d'interface 15. Le circuit de sortie du transistor T10 comporte une diode Zéner de protection DZ10 connectée en parallèle entre le collecteur et l'émetteur du transistor T10 et une résistance série R41 reliant le collecteur du transistor T10 et la borne de sortie délivrant le signal S1. Le fonctionnement du module de détection de court-circuit est le suivant, ce fonctionnement étant décrit en liaison avec le point i de la figure 3b.

A l'état initial, le système, après remise à zéro par l'intermédiaire du circuit 12 de remise à zéro, est tel que le moyen de commutation 2 est commuté de façon à assurer la liaison entre la sortie redressée alternateur SRA et la batterie B+. Une résistance R25 et une diode D8 assurant la liaison entre la ligne d'alimentation batterie, laquelle bien entendu sur basculement de la clef de contact K permet d'appliquer la tension batterie de l'ordre de 12 Volts à la résistance R25 et à la diode D8, permettent d'appliquer sur la ligne d'alimentation du pare-brise électrique LAPBE par l'intermédiaire d'une résistance R33 assurant la liaison de cette ligne d'alimentation LAPBE et d'une ligne de contrôle CLAPBE du pare-brise électrique à la masse une tension de l'ordre de 5/6e de la tension nominale de batterie, les résistances R25 et R33 ayant des valeurs dans un rapport 1 à 5 sensiblement. L'impédance ramenée du pare-brise électrique PBE, très faible et de l'ordre de 3Ω impose alors sur la ligne LAPBE et CLAPBE une tension pratiquement nulle. A l'état initial, les signaux S̅D̅E̅G̅ délivrés par l'inverseur 150 du deuxième circuit d'interface 15 et s̅d̅3̅ délivré par l'inverseur 18 étant normalement au niveau logique 1, ceux-ci saturent le transistor T9 et donc T10 par l'intermédiaire des résistances R35 et R36. Les transistors T9 et T10 de même que T12 et T13 forment un montage de type Darlington.

Après occurrence du signal s̅d̅e̅g̅, le système bascule en position dégivrage et les deux signaux S̅D̅E̅G̅ et s̅d̅3̅ basculent de l'état logique haut à l'état logique bas et ne saturent donc plus le transistor T9. En l'absence de court-circuit sur la ligne LAPBE d'alimentation du pare-brise électrique, la tension présente sur cette même ligne est de l'ordre de 60 à 70 volts et suffit, par l'intermédiaire du pont diviseur R34, R37 à saturer le transistor T9 qui ne change donc pas d'état. En présence d'un court-circuit, en régime de surtension, la tension présente sur la ligne d'alimentation du pare-brise électrique LAPBE, et donc sur la ligne de contrôle CLAPBE, n'est pas suffisante pour saturer le transistor T9 qui se bloque, entraînant le blocage du transistor T10 et, par conséquent, le basculement de la sortie S1 reliée au calculateur de climatisation de l'état logique bas à l'état logique haut, signalant ainsi un défaut de court-circuit de la ligne LAPBE d'alimentation.

En ce qui concerne le module de détection de mise en circuit ouvert de la ligne d'alimentation en surtension du pare-brise électrique, la ligne LAPBE, celui-ci, ainsi que représenté à titre d'exemple non limitatif en figure 3a, peut comporter un étage d'entrée formant pont diviseur, ce pont diviseur étant constitué par les résistances R42 et R43 sur la figure 3a. Ce pont diviseur est connecté entre la ligne de contrôle de la ligne d'alimentation en surtension du pare-brise électrique CLAPBE et la tension de masse du système. Bien entendu, une capacité C10 de filtrage du point milieu des résistances R42 et R43 est prévue.

Le module 191 précité comporte également un transistor en émetteur commun T11, alimenté par la tension d'alimentation +Vcc, la base de ce transistor T11 étant connectée au point milieu du pont diviseur précité. Une diode D11 permet d'assurer une protection du circuit de base du transistor T11.

En outre, de la même façon que dans le cas du module 190 de détection de court-circuit, un étage de commutation est prévu, lequel comporte en cascade un premier transistor T12 dont la base est connectée au point milieu de deux résistances R45 et R46. La résistance R45, est connectée au collecteur du transistor T11 et la résistance R46 est connectée à la deuxième sortie décalée du registre à décalage 13.

Les résistances R47 et R48 constituent des résistances de polarisation du transistor T12 et la capacité C12 une résistance de filtrage. Un deuxième transistor T13 constitue l'étage de commutation précité, ce deuxième transistor T13 étant alimenté par la tension batterie B+ par l'intermédiaire d'une résistance R49, le transistor T13 étant monté en émetteur commun. La base du transistor T13 est connectée à l'émetteur du premier transistor T12 et l'électrode de collecteur du transistor T13 délivre au calculateur de climatisation CC par l'intermédiaire d'un circuit de sortie constitué par une résistance R50 et une diode de protection DZ11, diode Zéner, un signal S2 de défaut de mise en circuit ouvert de la ligne d'alimentation en surtension du pare-brise électrique LAPBE.

Le fonctionnement du module de détection de mise en circuit ouvert 191 sera décrit en liaison avec la figure 3a et le point h de la figure 3b. L'état initial de la ligne d'alimentation du pare-brise électrique LAPBE est bien entendu identique à celui précédemment décrit dans le cas du module de détection de court-circuit 190. Ainsi, avant commutation des moyens de commutation 2, l'alternateur fonctionnant en régime de recharge de batterie à sa tension nominale, la tension sur la ligne d'alimentation du pare-brise électrique, bien que normalement de l'ordre de 10 Volts en raison de l'existence du pont diviseur R25, R33, est en fait ramenée en raison de la faible résistance du pare-brise électrique PBE de l'ordre de trois Ohms à une valeur très faible voisine de zéro. Le point milieu du premier pont diviseur R42, R43 est également à une tension voisine de la valeur zéro.

On comprendra bien sûr que, de préférence, la ligne de contrôle de la ligne d'alimentation du pare-brise électrique CLAPBE est directement connectée à la borne de commutation des moyens de commutation 2 à laquelle la ligne d'alimentation du pare-brise électrique LAPBE est elle-même connectée. Ceci permet d'effectuer un contrôle de la quasi-totalité de la ligne d'alimentation du pare-brise électrique LAPBE dans les conditions ci-après.

Sur coupure de la ligne d'alimentation du pare-brise électrique LAPBE, l'impédance ramenée par le pare-brise électrique de l'ordre de trois Ohms, très faible, ne court-circuite plus la ligne de contrôle d'alimentation du pare-brise électrique CLAPBE et la tension présente sur cette ligne de contrôle est de l'ordre de 10 Volts en raison de l'existence du pont diviseur R25, R33 précédemment mentionné.

Le transistor T11 qui, à l'état initial et en l'absence de défaut de mise en circuit ouvert de la ligne d'alimentation de pare-brise électrique LAPBE, est bloqué, les transistors T12 et T13 étant en conséquence respectivement conducteurs et conducteurs, le signal S2 ayant un niveau logique correspondant à une valeur basse conserve cette valeur en présence de la transition correspondant à l'ordre de dégivrage du pare-brise électrique. En présence d'un défaut de mise en circuit ouvert de la ligne d'alimentation du pare-brise électrique LAPBE, le pare-brise n'est plus relié à la ligne de contrôle CLAPBE, laquelle monte ainsi à un potentiel proche de 10 V suffisant pour saturer T11 par l'intermédiaire du pont diviseur R42, R43. La saturation de T11 entraîne le blocage de T12 et T13 et donc le basculement de la sortie S2 d'un niveau logique bas à un niveau logique haut.

On comprendra ainsi que le signal S2 constitue un signal de défaut représentatif de la mise en circuit ouvert de la ligne d'alimentation du pare-brise électrique LAPBE, cette fenêtre bien entendu intervenant préalablement au réamorçage effectif de l'alternateur, c'est-à-dire en dehors de la période effective de dégivrage du pare-brise électrique puisque la présence du régime de surtension en sortie redressée alternateur serait susceptible de provoquer en fait, de par l'apparition de la surtension sur la ligne de contrôle de la ligne d'alimentation du pare-brise électrique CLAPBE, un masquage de la tension de référence délivrée par le premier pont diviseur R42, R43. A cet effet, pour éviter le bocage des transistors T12 et T13 pour la saturation du transistor T11 lors de l'alimentation du pare-brise PBE en régime de surtension, la deuxième sortie sd2 du registre à décalage impose la saturation de T12 et donc de T13 par la résistance R46, en évitant ainsi une signalisation erronée.

Compte tenu de la présence dans l'organe de contrôle 1, tel que représenté en figure 3a, des modules de détection de court-circuit et de mise en circuit ouvert de la ligne d'alimentation du pare-brise électrique, il est en outre avantageux, conformément à un objet du système selon l'invention, de prévoir des moyens de contrôle de la continuité des circuits de détection correspondants.

A cet effet, ainsi qu'on l'a représenté en figure 3a, le circuit de détection de défauts 19 peut comporter avantageusement un module de contrôle de continuité électrique des modules précités. Ce module de contrôle comporte un transistor T14 monté un émetteur commun dont la base est pilotée par un signal à fréquence audio, ce signal étant noté sfa sur la figure 3a et pouvant avantageusement être délivré par l'horloge 10.

De préférence, mais de façon non limitative, le signal sfa, signal à fréquence audio, peut présenter une fréquence de l'ordre de 2500 Hz. Le collecteur du transistor T14 est relié par l'intermédiaire d'une diode D12, D13 polarisée en sens bloqué vis-à-vis des transistors T9 et T10 à l'électrode de base de ces transistors.

Le signal à fréquence audio sfa permet d'effectuer une modulation par impulsions des signaux S1 et S2 de défauts de mise en court-circuit ou à circuit ouvert de la ligne d'alimentation en surtension du pare-brise électrique. La base du transistor T14 est reliée à la sortie de l'horloge correspondante par l'intermédiaire d'une résistance R50.

La détection par le calculateur de climatisation CC des impulsions de modulation à la fréquence du signal à fréquence audio sfa, ces impulsions étant présentes en permanence, permet de contrôler la continuité électrique de la connexion des modules de détection précités.

On a ainsi décrit un système de commande de dégivrage en surtension d'un pare-brise électrique de véhicule automobile particulièrement performant dans la mesure où les risques des systèmes antérieurs inhérents à l'alimentation en surtension des circuits de dégivrage d'un pare-brise électrique ont été sensiblement diminués, voire pratiquement supprimés.

En particulier, ainsi qu'on l'a décrit en outre en figure 4, le système tel que représenté en figure 3a notamment permet de signaler les différents défauts répertoriés A, B, C, D, E, F, G, H, I la liste des défauts précités étant répertoriée en fonction, d'une part, de la régulation en régime de tension nominale à 14 Volts de recharge de la batterie ou d'autre part, du régime de surtension d'alimentation du pare-brise électrique pour assurer le dégivrage de celui-ci.

Les défauts précités peuvent être mis en évidence à l'aide de la lampe témoin LT branchée dans la ligne de la clef de contact K et sur utilisation d'un régulateur RE, tel que précédemment décrit dans la description.

Enfin, la dernière ligne du tableau, tel que représenté en figure 4, correspond non pas à une situation de défaut mais plus simplement à la situation préalable à la mise en route du véhicule, c'est-à-dire lorsque la clef de contact K est ouverte.

## Revendications

1. Système de commande de dégivrage en surtension du pare-brise électrique d'un véhicule automobile, comportant :
- un alternateur (A) de charge de batterie, le contrôle de l'excitation de l'inducteur dudit alternateur (A) étant effectué par l'intermédiaire d'un régulateur d'excitation et la régulation en surtension étant inhibée lorsque la batterie est reliée à la sortie redressée alternateur, alors qu'elle est autorisée lorsque le pare-brise est relié à la sortie redressée alternateur ;
- des moyens de commutation (2) interconnectés en sortie redressée alternateur (A) et permettant d'assurer la liaison de ladite sortie redressée alternateur vers le réseau de distribution d'énergie électrique à tension nominale de la batterie du véhicule ou vers le réseau d'alimentation du pare-brise électrique ;
lequel système de commande est caractérisé en ce qu'il comporte en outre :
- un calculateur de climatisation ou gestion (CC) ;
- un organe de commande (1) interconnecté audit calculateur (CC), ledit organe de commande recevant dudit calculateur un signal (s̅d̅e̅g̅) de déclenchement de dégivrage du pare-brise (PBE) et transmettant audit calculateur (CC) une pluralité de signaux de contrôle d'état (S1, S2), ledit organe de commande (1) étant constitué par une unité logique délivrant une pluralité de signaux de commande séquentielle (SCS), ladite pluralité de signaux de commande séquentielle comportant au moins :
. un signal de commande de désexcitation (scdexe) de l'inducteur de l'alternateur, délivré audit régulateur d'excitation,
. un signal de commande de commutation (sccom) destiné à commander lesdits moyens de commutation,
et provoquant successivement au moins :
. la désexcitation de l'alternateur (A) pour, amener ce dernier d'un régime de fonctionnement à tension de sortie redressée égale à la tension nominale de charge de la batterie à un régime de tension de sortie réduite,
. la commutation des moyens de commutation (2) pour assurer la liaison de la sortie redressée alternateur vers le réseau d'alimentation du pare-brise électrique,
. la commande de rerégulation de la tension d'excitation de l'alternateur,
. la commande d'excitation de l'inducteur de l'alternateur en régime de surtension d'alimentation pendant une fraction du temps de dégivrage, puis sur disparition dudit signal de déclenchement de dégivrage du pare-brise délivré par ledit calculateur de climatisation,
. la désexcitation de l'alternateur (A) pour amener ce dernier du régime de fonctionnement à tension de sortie redressée en surtension à un régime de tension de sortie réduite,
. la commutation des moyens (2) de commutation pour assurer la liaison de la sortie redressée alternateur vers le réseau de distribution d'énergie électrique à tension nominale du véhicule,
. la commande d'excitation de l'inducteur de l'alternateur (A) en régime de tension de sortie redressée égale à la tension nominale de charge de la batterie;
ledit organe de commande comportant en outre un circuit (19) de détection de défaut d'alimentation des circuits de dégivrage du pare-brise électrique, ce circuit de détection comprenant :
. un module (190) de détection de mise en court-circuit de la ligne d'alimentation en surtension du pare-brise électrique (PBE) ;
. un module (191) de détection de mise en circuit ouvert de la ligne d'alimentation (LAPBE) en surtension du pare-brise électrique (PBE).

2. Système de commande selon la revendication 1, caractérisé en ce que ledit organe de commande (1) reçoit en outre,
. un signal de contrôle (scsar) représentatif de l'état du niveau de tension de la sortie alternateur redressée,
. un signal de contrôle (scapbe) représentatif de l'état d'alimentation du pare-brise électrique.

3. Système selon l'une des revendications 1 ou 2, caractérisé en ce que ledit organe de commande (1) comporte :
- une horloge de référence (10) délivrant des impulsions calibrées (Ck) de fréquence de récurrence déterminée,
- un registre à décalage (13) recevant, d'une part, sur une entrée de cadencement lesdites impulsions d'horloge (Ck) et, d'autre part, sur une entrée à décalage ledit signal (SDEG) de déclenchemnt de dégivrage du pare-brise délivré par une interface (11) à partir d'un signal (s̅d̅e̅g̅) engendré par le calculateur de climatisation (CC), ledit registre à décalage comprenant une pluralité de sorties à décalage successivement incrémenté,
- un premier circuit d'interface (14) recevant à une borne d'entrée le signal décalé (sd1) délivré par une première sortie à décalage du registre à décalage et délivrant auxdits moyens de commutation (2) un signal (sccom) de commande de commutation de puissance,
- un deuxième circuit d'interface (15) recevant à une première borne d'entrée le signal décalé (sd2) délivré par une deuxième sortie à décalage du registre à décalage et à une deuxième borne d'entrée le signal de déclenchement de dégivrage (SDEG), ledit deuxième circuit d'interface délivrant à une sortie un signal (scdexc) de commande de désexcitation de l'alternateur, ce signal consistant en un signal obtenu par combinaison logique de type OU exclusif entre le signal de déclenchement de dégivrage (SDEG) et le signal décalé (sd2) délivré par la deuxième sortie décalée du registre à décalage,
- un troisième circuit d'interface (16) recevant à une première borne d'entrée ledit signal de déclenchement de dégivrage (SDEG) délivré par l'interface (11) à partir d'un signal issu du calculateur de climatisation (CC) et à une deuxième borne d'entrée le signal décalé (sd3) délivré par une troisième sortie à décalage du registre à décalage, ledit troisième circuit d'interface délivrant un signal (scream) de commande de réamorçage de l'alternateur, le signal (scream) de commande de réamorçage consistant en un signal obtenu par combinaison logique de type NON-OU entre ledit signal de déclenchement de dégivrage inversé (S̅D̅E̅G̅) et le signal décalé délivré par la troisième sortie à décalage du registre à décalage,
- un circuit (17) de commande du régulateur d'excitation comportant, connectés en série sur la borne d'entrée de commande d'excitation du régulateur,
. un circuit (170) de réglage de la tension de commande d'excitation interconnecté à la sortie redressée alternateur et permettant, sur occurrence du signal de déclenchement de dégivrage (SDEG), d'engendrer une tension de commande d'excitation (tce) à deux valeurs distinctes,
. un circuit (171) de commutation recevant sur une borne d'entrée de commutation ladite tension de commande d'excitation (tce) délivrée par le circuit (170) de réglage de la tension de commande d'excitation, ledit circuit (171) de commutation effectuant sur une borne de sortie, soit la transmission au régulateur d'excitation de la tension de commande d'excitation (tce) à l'une ou l'autre de ses deux valeurs, soit la coupure de cette tension de commande d'excitation pour assurer, soit l'excitation de l'inducteur de l'alternateur pour obtenir une tension alternateur redressée en régime de surtension ou en régime de tension nominale de charge de la batterie, soit la désexcitation de l'inducteur de l'alternateur.

4. Système selon la revendication 3, caractérisé en ce que ledit deuxième circuit d'interface (15) comporte :
- un circuit inverseur (150) à deux entrées, dont la première entrée est interconnectée à la tension d'alimentation de référence (+Vcc) et dont la deuxième entrée est pilotée par ledit signal (SDEG) de déclenchement de dégivrage délivré par le calculateur de climatisation, la sortie dudit circuit inverseur délivrant un signal inversé (S̅D̅E̅G̅),
- un circuit logique de type OU exclusif (151) recevant sur une première entrée ledit signal inversé (S̅D̅E̅G̅) délivré par ledit circuit inverseur et sur une deuxième entrée le signal décalé (sd2) délivré par la deuxième sortie à décalage, la sortie du circuit logique (151) de type OU exclusif constituant sortie du deuxième circuit d'interface délivrant ledit signal de commande de désexcitation de l'alternateur.

5. Système selon la revendication 3, caractérisé en ce que ledit troisième circuit d'interface ( 16) comporte :
- deux points d'entrée (R15, R16), une première borne d'entrée recevant ledit signal de déclenchement de dégivrage inversé (S̅D̅E̅G̅) et une deuxième borne d'entrée recevant le signal décalé (sd3) délivré par la troisième sortie à décalage du registre à décalage,
- un étage de commande de puissance comportant, montés en cascade :
. un premier et un deuxième transistors de type NPN (T3, T4), la base dudit premier transistor (T3) étant directement connectée au point milieu d'un pont diviseur (R15, R16) connecté entre lesdites bornes d'entrée et la base dudit deuxième transistor (T4) étant connectée au collecteur du premier transistor (T3), lesdits premier et deuxième transistors (T3 et T4) étant alimentés par la tension batterie,
. un troisième transistor (T5) de sortie de type complémenté PNP, la base dudit troisième transistor (T5) étant connectée au collecteur du deuxième transistor (T4) par l'intermédiaire d'un pont de résistances (R21, R22), le collecteur dudit troisième transistor (T5) étant connecté au point milieu d'un pont comprenant une première et une deuxième diodes (DZ6, D7), dont la deuxième diode (D7) est connectée dans le sens passant vis-à-vis dudit troisième transistor (T5) pour constituer une sortie délivrant ledit signal de commande de réamorçage de l'alternateur.

6. Système selon la revendication 3, caractérisé en ce que ledit circuit (170) de réglage de la tension de commande d'excitation comprend :
- un premier pont diviseur constitué par une première et une deuxième résistances (R30, R26) en série et une première diode Zéner (DZ27), ledit pont étant à sa borne d'entrée (R30) connecté à la sortie redressée alternateur,
- un quatrième transistor de commutation (T6), dont les bornes de commutation, collecteur-émetteur sont connectées en parallèle sur l'élément série constitué par ladite deuxième résistance (R26) et ladite première diode Zéner (DZ27), la base dudit quatrième transistor (T6) étant connectée au point milieu d'un deuxième pont diviseur constitué par deux résistances (R31, R32) et une diode (D9), ledit deuxième pont diviseur reliant le point milieu dudit premier pont diviseur et la borne d'alimentation en surtension du pare-brise électrique, ledit circuit (170) de réglage de la tension de commande d'excitation délivrant sur commutation dudit quatrième transistor (T6), la tension de commande d'excitation (tce) à l'une ou l'autre de ses deux valeurs.

7. Système selon les revendications 3 et 6, caractérisé en ce que ledit circuit (171) de commutation comporte :
- un cinquième transistor de commutation (T7) assurant la transmission de la tension de commande d'excitation (tce) au régulateur (RE) aux deux valeurs de cette tension ou la non transmission de cette tension (tce),
- un troisième pont diviseur comprenant une troisième et une quatrième résistances (R28, R29) ainsi qu'une deuxième diode Zéner (DZ9), la borne d'entrée (R28) dudit troisième pont étant connectée en un point commun à la borne de sortie (DZK27) dudit premier pont diviseur dudit circuit (170) de réglage de la tension de commande d'excitation, ledit cinquième transistor de commande (T7) ayant son émetteur connecté audit point commun et sa base connectée au point milieu (R28, R29) dudit troisième pont diviseur, le collecteur dudit cinquième transistor (T7) constituant la sortie dudit circuit de commutation (171),
- un sixième transistor (T8) de commande de commutation, dont le collecteur est connecté au point commun de ladite deuxième diode Zéner (DZ9) et de ladite quatrième résistance (R29) dudit troisième pont diviseur et dont la borne d'émetteur est connectée à la tension de masse du système, la base dudit sixième transistor de commande de commutation étant pilotée par ledit signal de commande de désexcitation de l'alternateur délivré par ledit deuxième circuit d'interface (15).

8. Système selon l'une quelconque des revendications précédentes, caractérisé en ce que ledit module (190) de détection de mise en court-circuit de la ligne d'alimentation en surtension du pare-brise électrique comporte :
- un étage d'entrée formant un quatrième pont diviseur (R34, R37) générateur d'une référence de tension, l'entrée du pont diviseur (R34) étant connectée à la ligne d'alimentation du pare-brise (LAPBE) par une ligne de contrôle (CLAPBE),
- un étage de commutation comportant en cascade :
. un septième transistor (T9), dont la base est connectée au point milieu dudit quatrième pont diviseur, ledit septième transistor (T9) étant alimenté par la tension d'alimentation (+Vcc), la base dudit septième transistor (T9) étant pilotée, d'une part, par le signal de déclenchement de dégivrage inversé (SDEG) et, d'autre part, par le signal (sd3) décalé délivré par la troisième sortie décalée du registre à décalage,
. un huitième transistor (T10) alimenté par la tension batterie (B) et dont la base est connectée à l'émetteur dudit septième transistor (T9), l'électrode de collecteur dudit huitième transistor (T10) délivrant audit calculateur de climatisation (CC) un signal (S1) de défaut de court-circuit de la ligne d'alimentation en surtension du pare-brise électrique (PBE).

9. Système selon la revendication 8, caractérisé en ce que ledit module (191) de détection de mise en circuit ouvert de la ligne d'alimentation en surtension comporte :
- un étage d'entrée, formant un cinquième pont diviseur (R42, R43) connecté entre ladite ligne d'alimentation en surtension du pare-brise électrique et la tension de masse du système,
- un neuvième transistor en émetteur commun (T11) alimenté par la tension d'alimentation (+Vcc), la base dudit neuvième transistor (T11) étant connectée au point milieu dudit cinquième pont diviseur,
- un étage de commutation comportant en cascade :
. un dixième transistor (T12), dont la base est connectée au point milieu d'un sixième pont diviseur, ledit dixième transistor (T12) étant alimenté par la tension d'alimentation (+Vcc), la base dudit dixième transistor (T12) étant pilotée par le signal décalé délivré par ladite deuxième sortie décalée du registre à décalage,
. un onzième transistor (T13) alimenté par la tension batterie (B) et dont la base est connectée à l'émetteur dudit dixième transistor (T12), l'électrode de collecteur dudit onzième transistor (T13) délivrant audit calculateur de climatisation (CC) un signal (S2) de défaut de mise en circuit ouvert de la ligne d'alimentation en surtension du pare-brise électrique (LAPBE).

10. Système selon l'une des revendications 7 à 9, caractérisé en ce que ledit circuit de détection de défaut comporte en outre un module de contrôle de continuité électrique desdits modules de détection de mise en court-circuit ou en circuit ouvert de la ligne d'alimentation en surtension du pare-brise électrique, ledit module de contrôle comportant un douzième transistor (T14) en émetteur commun, dont la base est pilotée par un signal à fréquence audio (sfa) délivré par ladite horloge (10) de référence, le collecteur dudit douzième transistor (T14) étant relié par l'intermédiaire d'une diode (D12, D13), polarisée en sens bloquée vis-à-vis desdits septième et huitième transistors (T9, T10), à l'électrode de base de ces transistors, ledit signal à fréquence audio (sfa) permettant d'effectuer une modulation par impulsions desdits signaux (S1, S2) de défaut de mise en court-circuit ou en circuit ouvert de la ligne d'alimentation en surtension du pare-brise électrique.

## Patentansprüche

1. Steuersystem für die elektrische Enteisung der Windschutzscheibe eines Kraftfahrzeugs durch Überspannung, enthaltend:
- einen Wechselstromgenerator (A) zum Laden der Batterie, wobei die Kontrolle der Erregung des Feldmagneten des genannten Wechselstromgenerators (A) über einen Erregungsregler bewirkt und die Überspannungsregelung unterbunden wird, wenn die Batterie an den gleichgerichteten Generatorausgang angeschlossen ist, während sie möglich bleibt, wenn die Windschutzscheibe mit dem gleichgerichteten Generatorausgang verbunden ist,
- Umschaltmittel (2), die mit dem gleichgerichteten Ausgang des Generators (A) verbunden sind und es erlauben, die Verbindung des genannten gleichgerichteten Generatorausgangs zum Nennstromverteilernetz der Fahrzeugbatterie oder zum Stromversorgungsnetz der Windschutzscheibe sicherzustellen,
wobei dieses Steuersystem **dadurch gekennzeichnet** ist, daß es außerdem folgendes enthält:
- einen Klimatisierungs- oder Verwaltungsrechner (CC),
- ein mit dem genannten Rechner (CC) verbundenes Steuerorgan (1), wobei das Steuerorgan vom genannten Rechner ein Signal (sdeg) für die Auslösung der Windschutzscheibenenteisung (PBE) empfängt und an den genannten Rechner (CC) eine Vielzahl von Zustandskontrollsignalen (S1, S2) sendet, wobei das genannte Steuerorgan (1) aus einer Logikeinheit besteht, die eine Vielzahl von sequentiellen Steuersignalen (SCS) liefert und die genannte Vielzahl von sequentiellen Steuersignalen wenigstens folgendes beinhaltet:
. ein Entregungssteuersignal (scdexe) des Generator-Feldmagneten, welches dem genannten Erregungsregler zugeführt wird,
. ein Umschaltsteuersignal (sccom), bestimmt zur Steuerung der genannten Umschaltmittel
und wodurch nacheinander wenigstens folgende Vorgänge bewirkt werden:
. die Entregung des Wechselstromgenerators (A), um letzteren vom Betriebsbereich mit einer der Batterienennladespannung entsprechenden gleichgerichteten Ausgangsspannung auf einen Bereich mit reduzierter Ausgangsspannung umzuschalten,
. die Umschaltung der Umschaltmittel (2) zur Gewährleistung der Verbindung des gleichgerichteten Generatorausgangs mit dem Stromversorgungsnetz der Windschutzscheibe,
. die Nachregelungssteuerung der Generator-Erregerspannung,
. die Erregungssteuerung des Generator-Feldmagneten bei Speiseüberspannung während eines Teils der Enteisungszeit, dann beim Verschwinden des genannten Windschutzscheiben-Enteisungssignals, welches vom genannten Klimatisierungsrechner geliefert wird,
. die Entregung des Wechselstromgenerators (A), um diesen von einem Betriebsbereich mit gleichgerichteter Ausgangsüberspannung auf einen Bereich mit reduzierter Ausgangsspannung umzuschalten,
. die Umschaltung der Umschaltmittel (2) zur Gewährleistung der Verbindung des gleichgerichteten Generatorausgangs mit dem Nennspannungs-Stromverteilungsnetz des Fahrzeugs,
. die Erregungssteuerung des Feldmagneten des Wechselstromgenerators (A) im gleichgerichteten Ausgangsspannungsbereich entsprechend der Batterienennladespannung,
wobei das genannte Steuerorgan außerdem eine Schaltung (19) zur Erkennung von Versorgungsstörungen der Windschutzscheiben-Enteisungskreise enthält und diese Erkennungsschaltung folgendes einschließt:
. ein Modul (190) zur Erkennung von Kurzschlüssen in der Überspannungsleitung der Windschutzscheibe (PBE),
. ein Modul (191) zur Erkennung von offenen Stromkreisen in der Überspannungsleitung (LAPBE) der Windschutzscheibe (PBE).

2. Steuersystem nach Anspruch 1, **dadurch gekennzeichnet,** daß das genannte Steuerorgan (1) außerdem folgendes empfängt:
. ein Kontrollsignal (scsar), welches den Zustand des Spannungspegels des gleichgerichteten Generatorausgangs repräsentiert,
. ein Kontrollsignal (scapbe), welches den Stromversorgungszustand der Windschutzscheibe repräsentiert.

3. System nach einem der Ansprüche 1 oder 2, **dadurch gekennzeichnet,** daß das Steuerorgan (1) folgendes enthält:
- einen Bezugstaktgeber (10), der geeichte Impulse (Ck) einer festgelegten Folgefrequenz liefert,
- ein Schieberegister (13), welches einerseits an einem Takteingang die genannten Taktgeberimpulse (Ck) und andererseits an einem Schiebeeingang das genannten Signal (SDEG) zur Auslösung der Windschutzscheibenenteisung empfängt, welches über eine Schnittstelle (11) von einem Signal (S̅D̅E̅G̅) geliefert wird, das vom Klimatisierungsrechner (CC) erzeugt wird, wobei das genannte Schieberegister eine Vielzahl von laufend ansteigenden Schiebeausgängen enthält,
- einen ersten Schnittstellenkreis (14), der an einer Eingangsklemme das verschobene Signal (sd1) empfängt, welches von einem ersten Schiebeausgang des Schieberegisters geliefert wird und die genannten Umschaltmittel (2) mit einem Signal (sccom) für die Steuerung der Leistungsumschaltung versorgt,
- einen zweiten Schnittstellenkreis (15), der an einer ersten Eingangsklemme das verschobene Signal (sd2) empfängt, welches von einem zweiten Schiebeausgang des Schieberegisters geliefert wird, und an einer zweiten Eingangsklemme das Signal zur Auslösung der Enteisung (SDEG), wobei der genannte zweite Schnittstellenkreis an einem Ausgang ein Signal (scdexc) für die Entregungssteuerung des Generators liefert und dieses Signal aus einem Signal besteht, welches durch logische exklusive ODER-Verknüpfung zwischen dem Auslösesignal für die Enteisung (SDEG) und dem verschobenen Signal (sd2) zustande kommt, welches von dem zweiten Schiebeausgang des Schieberegisters geliefert wird,
- einen dritten Schnittstellenkreis (16), der an einer ersten Eingangsklemme das genannte Signal zur Auslösung der Enteisung (SDEG) empfängt, welches durch die Schnittstelle (11) aufgrund eines Signals geliefert wird, das vom Klimatisierungsrechner (CC) ausgeht, und an einer zweiten Eingangsklemme das verschobene Signal (sd3), welches von einem dritten Schiebeausgang des Schieberegisters stammt, wobei der genannte dritte Schnittstellenkreis ein Signal (scream) für die Rückzündungssteuerung des Generators liefert und Signal (scream) für die Rückzündungssteuerung aus einem Signal besteht, welches durch logische NEIN-ODER-Verknüpfung zwischen dem genannten umgekehrten Signal zur Auslösung der Enteisung (S̅D̅E̅G̅) und dem verschobenen Signal zustande kommt, welches von dem dritten Schiebeausgang des Schieberegisters geliefert wird,
- einen Steuerkreis (17) für den Erregungsregler, der, an der Eingangsklemme für die Erregungssteuerung des Reglers in Reihe geschaltet, folgendes enthält:
. einen Schaltkreis (170) zur Regelung der an den gleichgerichteten Generatorausgang angelegten Erregungssteuerspannung, wodurch beim Auftreten des Enteisungsauslösesignals (SDEG) die Erzeugung einer Erregungssteuerspannung (tce) mit zwei verschiedenen Werten ermöglicht wird,
. einen Schaltkreis (171) für die Umschaltung, der an einer Umschalteingangsklemme die genannte Erregungssteuerspannung (tce) empfängt, die von dem Regelkreis (170) für die Erregungssteuerspannung geliefert wird, wobei der genannte Schaltkreis (171) für die Umschaltung an einer Ausgangsklemme entweder die Übermittlung der Erregungssteuerspannung (tce) an den Erregungsregler mit dem einen oder dem anderen der beiden Werte oder die Unterbrechung dieser Erregungssteuerspannung bewirkt, um entweder die Erregung des Generator-Feldmagneten sicherzustellen, so daß eine gleichgerichtete Generatorspannung im Überspannungsbereich oder im Batterienennladespannungsbereich erzielt wird, oder die Entregung des Generator-Feldmagneten.

4. System nach Anspruch 3, **dadurch gekennzeichnet,** daß der genannte zweite Schnittstellenkreis (15) folgendes enthält:
- einen Inverterkreis (150) mit zwei Eingängen, dessen erster Eingang mit der Bezugsspeisespannung (+Vcc) verbunden ist und dessen zweiter Eingang durch das genannte Signal (SDEG) zur Auslösung der Enteisung vorgesteuert wird, welches vom Klimatisierungsrechner stammt, wobei der Ausgang des genannten Inverterkreises ein Umkehrsignal (S̅D̅E̅G̅) liefert,
- einen Logik-Schaltkreis für exklusive ODER-Verknüpfung (151), der an einem ersten Eingang das genannte Umkehrsignal (S̅D̅E̅G̅) empfängt, welches vom genannten Inverterkreis geliefert wird, und an einem zweiten Eingang das verschobene Signal (sd2), welches vom zweiten Schiebeausgang geliefert wird, während der Ausgang des Logik-Schaltkreises (151) für exklusives ODER als Ausgang des zweiten Schnittstellenkreises dient, der das genannte Entregungssteuersignal des Generators liefert.

5. System nach Anspruch 3, **dadurch gekennzeichnet,** daß der genannte dritte Schnittstellenkreis (16) folgendes enthält:
- zwei Eingangspunkte (R15, R16), wobei eine erste Eingangsklemme das genannte Umkehrsignal zur Auslösung der Enteisung (S̅D̅E̅G̅) und eine zweite Eingangsklemme das verschobene Signal (sd3) empfängt, welches vom dritten Schiebeausgang des Schieberegisters geliefert wird,
- eine Leistungssteuerstufe, die in Kaskadenschaltung folgendes enthält:
. einen ersten und einen zweiten Transistor vom Typ NPN (T3, T4), wobei die Basis des genannten ersten Transistors (T3) direkt mit dem mittleren Abgriffspunkt eines zwischen den genannten Eingangsklemmen angeschlossenen Spannungsteilers (R15, R16) verbunden und die Basis des genannten zweiten Transistors (T4) an den Kollektor des ersten Transistors (T3) angeschlossen ist, wobei der genannte erste und der genannte zweite Transistor (T3 und T4) durch die Batteriespannung gespeist werden,
. einen dritten Ausgangstransistor (T5) vom ergänzten Typ PNP, wobei die Basis des genannten dritten Transistors (T5) über eine Widerstandsbrücke (R21, R22) mit dem Kollektor des zweiten Transistors (T4) verbunden ist und der Kollektor des genannten dritten Transistors (T5) mit dem mittleren Abgriffspunkt einer Brücke verbunden ist, die eine erste und eine zweite Diode (DZ6, D7) enthält, von denen die zweite Diode (D7) in der Richtung angeschlossen ist, die dem genannten dritten Transistor (T5) entgegengesetzt verläuft, um einen Ausgang zu bilden, der das genannte Rückzündungssteuersignal des Generators liefert.

6. System nach Anspruch 3, **dadurch gekennzeichnet,** daß der genannte Schaltkreis (170) zur Regelung der Erregungssteuerspannung folgendes enthält:
- einen ersten Spannungsteiler, bestehend aus einem in Reihe geschalteten ersten und zweiten Widerstand (R30, R26) und einer ersten Zenerdiode (DZ27), wobei die genannte Brücke mit ihrer Eingangsklemme (R30) an den gleichgerichteten Generatorausgang angeschlossen ist,
- einen vierten Schalttransistor (T6), dessen Umschaltklemmen Kollektor-Emitter parallel zum Reihenelement geschaltet sind, welches aus dem genannten zweiten Widerstand (R26) und der genannten ersten Zenerdiode (DZ27) gebildet wird, wobei die Basis des genannten vierten Transistors (T6) mit dem mittleren Abgriffspunkt eines zweiten Spannungsteilers verbunden ist, der aus zwei Widerständen (R31, R32) und einer Diode (D9) gebildet wird, während der genannte zweite Spannungsteiler den mittleren Abgriffspunkt des genannten ersten Spannungsteilers und die Überspannungsspeiseklemme der Windschutzscheibe miteinander verbindet, wobei der genannte Schaltkreis (170) zur Regelung der Erregungssteuerspannung bei Umschaltung des genannten vierten Transistors (T6) die Erregungssteuerspannung (tce) mit dem einen oder anderen der beiden Werte liefert.

7. System nach Anspruch 3 und 6, **dadurch gekennzeichnet,** daß der genannte Schaltkreis (171) folgendes enthält:
- einen fünften Schalttransistor (T7), der die Übermittlung der Erregungssteuerspannung (te) an den Regler (RE) mit den beiden Werten dieser Spannung oder die Nichtübermittlung dieser Spannung (tce) sicherstellt,
- einen dritten Spannungsteiler mit einem dritten und einem vierten Widerstand (R28, R29) sowie einer zweiten Zenerdiode (DZ9), wobei die Eingangsklemme (R28) des genannten dritten Spannungsteilers an einem gemeinsamen Punkt mit der Ausgangsklemme (DZK27) des genannten ersten Spannungsteilers des genannten Schaltkreises (170) zur Regelung der Erregungssteuerspannung verbunden ist, während der Emitter des genannten fünften Schalttransistors (T7) an den genannten gemeinsamen Punkt und die Basis an den mittleren Abgriffspunkt (R28, R29) des genannten dritten Spannungsteilers angeschlossen ist und der Kollektor des genannten fünften Transistors (T7) den Ausgang des genannten Schaltkreises (171) bildet,
- einen sechsten Transistor (T8) zur Umschaltsteuerung, dessen Kollektor mit dem gemeinsamen Punkt der genannten zweiten Zenerdiode (DZ9) und dem genannten vierten Widerstand (R29) des genannten dritten Spannungsteilers verbunden und dessen Emitterklemme an die Massespannung des Systems angeschlossen ist, wobei die Basis des genannten sechsten Schalttransistors durch das genannte Generator-Entregungssteuersignal vorgesteuert wird, welches von dem genannten zweiten Schnittstellenkreis (15) ausgeht.

8. System nach einem der vorherigen Ansprüche, **dadurch gekennzeichnet,** daß das genannte Modul (190) zur Erkennung von Kurzschlüssen in der Überspannungszuleitung der Windschutzscheibe folgendes enthält:
- eine Eingangsstufe, die einen vierten Spannungsteiler (R34, R37) bildet, der eine Bezugsspannung erzeugt, wobei der Eingang des Spannungsteilers (R34) mit der Windschutzscheibenzuleitung (LAPBE) über eine Kontrolleitung (CLAPBE) verbunden ist,
- eine Schaltstufe, die in Kaskadenschaltung folgendes enthält:
. einen siebten Transistor (T9), dessen Basis mit dem mittleren Abgriffspunkt des genannten vierten Spannungsteilers verbunden ist, wobei der genannte siebte Transistor (T9) mit der Speisespannung (+Vcc) versorgt wird, während die Basis des genannten siebten Transistors (T9) einerseits durch das umgekehrte Signal zur Auslösung der Enteisung (SDEG) und andererseits durch das verschobene Signal (sd3) vorgesteuert wird, welches vom dritten Schiebeausgang des Schieberegisters ausgeht,
. einen achten Transistor (T10), der mit der Batteriespannung (B) versorgt wird und dessen Basis an den Emitter des genannten siebten Transistors (T9) angeschlossen ist, wobei die Elektrode des Kollektors des genannten achten Transistors (T10) an den genannten Klimatisierungsrechner (CC) ein Signal (S1) für Kurzschlußstörungen in der Überspannungsleitung der Windschutzscheibe (PBE) liefert.

9. System nach Anspruch 8, **dadurch gekennzeichnet,** daß das genannte Modul (191) zur Erkennung von offenen Stromkreisen in der Überspannungszuleitung folgendes enthält:
- eine Eingangsstufe, die einen fünften Spannungsteiler (R42, R43) bildet, angeschlossen zwischen der genannten Überspannungszuleitung zur Windschutzscheibe und der Massespannung des Systems,
- einen neunten Transistor mit gemeinsamem Emitter (T11), gespeist mit der Speisespannung (+Vcc), wobei die Basis des genannten neunten Transistors (T11) an den mittleren Abgriffspunkt des genannten fünften Spannungsteilers angeschlossen ist,
- eine Schaltstufe, die in Kaskadenschaltung folgendes enthält:
. einen zehnten Transistor (T12), dessen Basis mit dem mittleren Abgriffspunkt eines sechsten Spannungsteilers verbunden ist, wobei der genannte zehnte Transistor (T12) mit der Speisespannung (+Vcc) gespeist wird, während die Basis des genannten zehnten Transistors (T12) durch das verschobene Signal vorgesteuert wird, welches durch den genannten zweiten Schiebeausgang des Schieberegisters geliefert wird,
. einen elften Transistor (T13), gespeist mit der Batteriespannung (B), dessen Basis mit dem Emitter des genannten zehnten Transistors (T12) verbunden ist, wobei die Elektrode des Kollektors des genannten elften Transistors (T13) an den genannten Klimatisierungsrechner (CC) ein Signal (S2) für die Anzeige eines offenen Stromkreises in der Überspannungszuleitung zur Windschutzscheibe (LAPBE) liefert.

10. System nach einem der Ansprüche 7 bis 9, **dadurch gekennzeichnet,** daß der Fehlererkennungskreis außerdem ein Modul zur Kontrolle des elektrischen Duchgangs der genannten Module zur Erkennung von Kurzschlüssen oder offenen Stromkreisen in der Überspannungsleitung der Windschutzscheibe enthält, wobei das genannte Kontrollmodul einen zwölften Transistor (T14) mit gemeinsamem Emitter aufweist, dessen Basis durch ein Audiofrequenzsignal (sfa) vorgesteuert wird, welches vom genannten Bezugstaktgeber (10) ausgeht, während der Kollektor des genannten zwölften Transistors (T14) über eine Diode (D12, D13), die in blockierter Richtung gegenüber dem genannten siebten und achten Transistor (T9, T10) polarisiert ist, mit der Basiselektrode dieser Transistoren verbunden ist, wobei das genannte Audiofrequenzsignal (sfa) die Impulsmodulation der genannten Signale (S1, S2) zur Anzeige von Kurzschlüssen oder offenen Stromkreisen in der Überspannungszuleitung der elektrischen Windschutzscheibe erlaubt.

## Claims

1. A defrosting-control system using overvoltage for an electric windshield of an automotive vehicle, comprising:
- a battery charging alternator (A), the excitation regulation of the inductor of said alternator (A) being performed by means of an excitation regulator and the regulation using overvoltage being inhibited when the battery is connected to the rectified alternator output, whereas it is authorised when the windshield is connected to the rectified alternator output;
- switching means (2) interconnected at the rectified alternator output (A) and enabling the coupling of said rectified alternator output to the distribution network for the electric energy at rated voltage of the battery of the vehicle or to the power supply network of the electric windshield;
which control system is **characterised in that** it also comprises:
- an air conditioning or control computer (CC);
- a control unit (1) interconnected to said computer (CC), said control unit receiving from said computer a signal (s̅d̅e̅g̅) for triggering the defrosting of the windshield (PBE) and transmitting to said computer (CC) a plurality of state regulation signals (S1, S2), said control unit (1) being formed by a logic unit supplying a plurality of sequential control signals (SCS), said plurality of sequential control signals comprising at least:
. one de-excitation control signal (scdexe) of the inductor of the alternator, supplied to said excitation regulator,
. one switching control signal (sccom) intended to control said switching means,
and successively causing at least:
. the de-excitation of the alternator (A) to bring the latter from an operating state having a rectified output voltage equal to the rated battery charging voltage to a state with reduced output voltage,
. the switching of the switching means (2) to ensure the coupling of the rectified alternator output to the power supply network of the electric windshield,
. the reregulation control of the excitation voltage of the alternator,
. the excitation control of the inductor of the alternator in power supply overvoltage conditions during a fraction of the defrosting time, then with the disappearance of said signal for triggering the defrosting of the windshield supplied by said air conditioning computer,
. the de-excitation of the alternator (A) to bring the latter from the operating state with rectified output voltage with overvoltage to a state with reduced output voltage,
. the switching of the switching means (2) to ensure the coupling of the rectified alternator output to the electrical energy distribution network at rated voltage of the vehicle,
. the excitation control of the inductor of the alternator (A) in rectified output voltage conditions equal to the rated battery charging voltage;
said control unit also comprising an error detection circuit (19) for the power supply of the defrosting circuits of the electric windshield, this detection circuit comprising:
. a short-circuit detection module (190) for the supply line using overvoltage of the electric windshield (PBE);
. an open circuit detection module (191) for the supply line (LAPBE) using overvoltage of the electric windshield (PBE).

2. A control system according to Claim 1,
**characterised in that** said control unit (1) also receives
- a check signal (scsar) representative of the state of the voltage level of the rectified alternator output,
- a check signal (scapbe) representative of the state of the power supply of the electric windshield.

3. A system according to one of Claims 1 or 2,
**characterised in that** said control unit (1) comprises:
- a reference clock (10) supplying calibrated pulses (Ck) of a determined repetition frequency,
- a shift register (13) receiving, firstly, at a repetition rate input, said clock pulses (Ck) and, secondly, at a shift input, said signal (SDEG)for triggering the defrosting of the windshield supplied by an interface (11) from a signal (s̅d̅e̅g̅) generated by the air conditioning computer (CC), said shift register comprising a plurality of successively incremented shift outputs,
- a first interface circuit (14) receiving at an input terminal the shifted signal (sd1) supplied by a first output of the shift register and supplying said switching means (2) with a power conversion control signal (sccom),
- a second interface circuit (15) receiving at a first input terminal the shifted signal (sd2) supplied by a second output of the shift register and at a second input terminal the signal for triggering defrosting (SDEG), said second interface circuit supplying to an output a alternator de-excitation control signal (scdexc), this signal consisting of a signal obtained by logical combination of the exclusive OR type between the signal for triggering defrosting (SDEG) and the shifted signal (sd2) supplied by the second output of the shift register,
- a third interface circuit (16) receiving at a first input terminal said signal for triggering defrosting (SDEG) supplied by the interface (11) from a signal emitted by the air conditioning computer (CC) and at a second input terminal the shifted signal (sd3) supplied by a third output of the shift register, said third interface circuit supplying an alternator refiring control signal (scream), said refiring control signal (scream) consisting of a signal obtained by the logical combination of the type NOR between said inverted signal for triggering defrosting (S̅D̅E̅G̅) and the shifted signal supplied by the third output of the shift register,
- an excitation regulator control circuit (17) comprising, connected in series at the excitation control input terminal of the regulator,
. a excitation control voltage regulating circuit (170) interconnected at the alternator rectified output and enabling, with the occurrence of the signal for triggering defrosting (SDEG), an excitation control voltage (tce) having two distinct values to be generated,
. a switching circuit (171) receiving at a switching input terminal said excitation control voltage (tce) supplied by the excitation control voltage regulating circuit (170), said switching circuit (171) performing, at an output terminal, either the transmission to the excitation regulator of the excitation control voltage (tce) at one or the other of its two values, or the interruption of this excitation control voltage to ensure, either the excitation of the inductor of the alternator to obtain an alternator rectified voltage in overvoltage conditions or in rated voltage conditions of the battery charge, or the de-excitation of the inductor of the alternator.

4. A system according to Claim 3,
**characterised in that** said second interface circuit (15) comprises:
- a circuit inverter (150) having two inputs, the first input of which is interconnected to the reference supply voltage (+Vcc) and the second input of which is piloted by said defrosting triggering signal (SDEG) supplied by the air conditioning computer, the output of said circuit inverter supplying an inverted signal (S̅D̅E̅G̅),
- a logic circuit of the exclusive OR type (151) receiving at a first input said inverted signal (S̅D̅E̅G̅) supplied by said circuit inverter and at a second input the shifted signal (sd2) supplied by the second shift output, the output of the logic circuit (151) of the exclusive OR type forming the output of the second interface circuit supplying said alternator de-excitation control signal.

5. A system according to Claim 3,
**characterised in that** said third interface circuit (16) comprises:
- two input points (R15, R16), a first input terminal receiving said inverted signal for triggering defrosting (S̅D̅E̅G̅) and a second input terminal receiving the shifted signal (sd3) supplied by the third output of the shift register,
- a power control stage comprising, mounted in cascade:
. a first and a second transistor of the type NPN (T3, T4), the base of said first transistor (T3) being directly connected to the centre point of a voltage divider bridge (R15, R16) connected between said input terminals, and the base of said second transistor (T4) being connected to the collector of the first transistor (T3), said first and second transistors (T3 and T4) being supplied by the battery voltage,
. a third output transistor (T5) of the PNP complementary type, the base of said third transistor (T5) being connected to the collector of the second transistor (T4) by means of a resistance bridge (R21, R22), the collector of said third transistor (T5) being connected to the centre point of a bridge comprising a first and a second diode (DZ6, D7), the second diode (D7) of which is connected in the conducting direction with respect to said third transistor (T5) to form an output supplying said control signal for re-energizing the alternator.

6. A system according to Claim 3,
**characterised in that** said excitation control voltage regulating circuit (170) comprises :
- a first voltage divider bridge formed by a first and a second resistor (R30, R26) in series and a first Zener diode (DZ27), said bridge at its input terminal (R30) being connected to the alternator rectified output,
- a fourth switching transistor (T6), the switching terminals, collector-emitter, of which are connected in parallel on the series component formed by said second resistor (R26) and second first Zener diode (DZ27), the base of said fourth transistor (T6) being connected to the centre point of a second voltage divider bridge formed by two resistors (R31, R12) and a diode (D9), said second voltage divider bridge connecting the centre point of said first voltage divider bridge and the supply terminal using overvoltage of the electric windshield, said excitation control voltage regulating circuit (170) supplying, with the switching of said fourth transistor (T6), the excitation control voltage (tce) at one of its two values.

7. A system according to Claims 1 and 6,
**characterised in that** said switching circuit (171) comprises:
- a fifth switching transistor (T7) ensuring the transmission of the excitation control voltage (tce) to the regulator (RE) with the two values of this voltage or the non-transmission of this voltage (tce),
- a third voltage divider bridge comprising a third and a fourth resistor (R28, R29) as well as a second Zener diode (DZ9), the input terminal (R28) of said third bridge being connected at a common point to the output terminal (DZK27) of said first voltage divider bridge of said circuit (170) for regulating the excitation control voltage, said fifth control transistor (T7) having its emitter connected at said common point and its base connected to the centre point (R28, R29) of said third voltage divider bridge, the collector of said fifth transistor (T7) forming the output of said switching circuit (171),
- a sixth switching control transistor (T8), the collector of which is connected to the common point of said second Zener diode (DZ9) and of said fourth resistor (R29) of said third voltage divider bridge and the emitter terminal of which is connected to the earth potential of the system, the base of said sixth switching control transistor being piloted by said de-excitation control signal of the alternator supplied by said second interface circuit (15).

8. A system according to any one of the preceding Claims, **characterised in that** said short-circuit detection module (190) for the supply line using overvoltage of the electric windshield comprises:
- an input stage forming a fourth voltage divider bridge (R34, R37) generating a reference voltage, the input of the voltage divider bridge (R34) being connected to the supply line of the windshield (LAPBE) by a monitoring line (CLAPBE),
- a switching stage comprising in cascade:
. a seventh transistor (T9), the base of which is connected to the centre point of said fourth voltage divider bridge, said seventh transistor (T9) being supplied by the supply voltage (+Vcc), the base of said seventh transistor (T9) being piloted, firstly, by the inverted signal for triggering defrosting (SDEG) and secondly by the shifted signal (sd3) supplied by the third output of the shift register,
. an eighth transistor (T10) supplied by the battery voltage (B) and the base of which is connected to the emitter of said seventh transistor (T9), the electrode of the collector of said eighth transistor (T10) supplying said air conditioning computer (CC) with a short-circuit error signal (S1) for the supply line using overvoltage of the electric windshield (PBE).

9. A system according to Claim 8,
**characterised in that** said open-circuit detection module (191) for the supply line using overvoltage comprises:
- a input stage forming a fifth voltage divider bridge (R42, R43) connected between said supply line using overvoltage of the electric windshield and the earth potential of the system,
- a ninth transistor as a common emitter (T11) supplied by the supply voltage (+Vcc), the base of said ninth transistor (T11) being connected to the centre point of said fifth voltage divider bridge,
- a switching stage comprising in cascade:
. a tenth transistor (T12), the base of which is connected to the centre point of a sixth voltage divider bridge, said tenth transistor (T12) being supplied by the supply voltage (+Vcc), the base of said tenth transistor being piloted by the shifted signal supplied by said second output of the shift register,
. an eleventh transistor (T13) supplied by the battery voltage (B) and the base of which is connected to the emitter of said tenth transistor (T12), the collector electrode of said eleventh transistor (T13) supplying said air conditioning computer (CC) with an open-circuit error signal (S2) for the supply line using overvoltage of the electric windshield (LAPBE).

10. A system according to one of Claims 7 to 9,
**characterised in that** said error detection circuit also comprises a module for monitoring the electrical continuity of said short-circuit or open-circuit detection modules of the supply line using overvoltage of the electric windshield, said monitoring module comprising a twelfth transistor (T14) as a common emitter, the base of which is piloted by an audio frequency signal (sfa) supplied by said reference clock (10), the collector of said twelfth transistor (T14) being connected by means of a diode (D12, D13), polarised in the reverse direction with respect to said seventh and eighth transistors (T9, T10), to the base electrode of these transistors, said audio frequency signal (sfa) enabling the performance of a pulse modulation of said short-circuits or open-circuit error signals (S1, S2) for the supply line using overvoltage of the electric windshield.
